(19) Europäisches Patentamt

European Patent Office

Office européen des brevets

(11) **EP 3 684 025 B1**

(12) **EUROPEAN PATENT SPECIFICATION**

(45) Date of publication and mention
of the grant of the patent:
**14.02.2024 Bulletin 2024/07**

(21) Application number: **18880890.1**

(22) Date of filing: **26.11.2018**

(51) International Patent Classification (IPC):
**H04L 9/40** *(2022.01)*        **G06F 21/55** *(2013.01)*
**G06F 21/56** *(2013.01)*

(52) Cooperative Patent Classification (CPC):
**G06F 21/562; G06F 21/552; H04L 63/14;
H04L 63/1416; H04L 63/1425; H04L 63/1483;**
G06F 2221/2119

(86) International application number:
**PCT/CN2018/117433**

(87) International publication number:
**WO 2019/101197 (31.05.2019 Gazette 2019/22)**

(54) **WEB PAGE REQUEST IDENTIFICATION**

IDENTIFIZIERUNG EINER WEBSEITENANFORDERUNG

IDENTIFICATION DE DEMANDE DE PAGE WEB

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2017 CN 201711188652**

(43) Date of publication of application:
**22.07.2020 Bulletin 2020/30**

(73) Proprietor: **New H3C Security Technologies Co.,
Ltd.**
**Hefei, Anhui 230001 (CN)**

(72) Inventor: **SUN, Songer**
**Beijing 100085 (CN)**

(74) Representative: **IPAZ
Bâtiment Platon
Parc Les Algorithmes
91190 Saint-Aubin (FR)**

(56) References cited:
CN-A- 102 222 187     CN-A- 103 605 794
CN-A- 105 553 998

• SHA HONGZHOU ET AL: "Survey on malicious
webpage detection research", CHINESE
JOURNAL OF COMPUTERS, BEIJING, CN, vol. 39,
no. 3, 31 March 2016 (2016-03-31) , pages 529-542,
XP009520213, ISSN: 0254-4164
• Sha, Hongzhou: "Survey on malicious webpage
detection research", Chinese journal of
computers, vol. 39, no. 03, 31 March 2016
(2016-03-31), pages 529-542, XP009520213, ISSN:
0254-4164

**Description**

The present disclosure claims the priority to a Chinese patent present disclosure No. 201711188652.2, filed with the China National Intellectual Property Administration on November 24, 2017 and entitled "A METHOD AND APPARATUS FOR IDENTIFYING A WEB PAGE REQUEST".

**BACKGROUND**

A malicious web page request is a form of attack used by an attacker. The malicious web page request utilizes vulnerabilities of the network services to attack a network server, through questionnaire uploading, cross-site scripting, HTTP (HyperText Transfer Protocol) request spoofing, SQL (Structured Query Language) injection, and the like, so as to achieve the purposes of stealing information, disabling a web service, etc.

In order to improve network security and ensure quality of service, there is a need for accurately identifying malicious web page requests. Currently, the process of identifying a web page request includes: obtaining a large number of sample web page requests having tags; extracting feature vectors from the sample web page requests; training a web page request identification model using the feature vectors together with the tags of the sample web page requests; and determining whether a web page request to be identified is a malicious web page request using the trained web page request identification model. CN 105553998 A proposes a web abnormal detection method. Network behavior characteristic values are extracted from collected data flows. A set of characteristic values for normal network behaviors are determined. The set of characteristic values are clustered using a K-means clustering algorithm. Centers of resulting clusters are determined. Distances between characteristic values for other application layer network behaviors and centers of the clusters are determined. When the minimum distance is less than a preset threshold, the network behavior corresponding to the characteristic value is considered abnormal.

FIG. 1 is a schematic diagram of a first flow chart of a method for identifying a web page request provided by an example of the present disclosure;

FIG. 2 is a schematic diagram of a second flow chart of a method for identifying a web page request provided by an example of the present disclosure;

FIG. 3 is a schematic diagram of a clustering result according to an example of the present disclosure;

FIG. 4 is a schematic diagram of a normal distribution for cluster L1 used in an example of the present disclosure;

FIG. 5 is a schematic diagram of the structure of an apparatus for identifying a web page request provided by an example of the present disclosure;

FIG. 6 is a schematic diagram of the structure of an electronic device provided by an example of the present disclosure.

**DETAILED DESCRIPTION**

The technical solutions in the examples of the present disclosure will be clearly and completely described in combination with the drawings in the examples of the present disclosure. Obviously, the described examples are only some, and not all, of the examples of the present disclosure. All other examples obtained based on the examples of the present disclosure by those skilled in the art without any creative efforts fall into the scope of protection defined by the present disclosure.

Currently, a large number of sample web page requests having tags are required. A web page request identification model is trained and obtained using a great amount of tag data and sample web page requests, and then it is determined whether a web page request to be identified is a malicious web page request based on the trained web page request identification model. This results in a high computation complexity and a slow training of the web page request identification model. Here, a tag of a sample web page request includes a tag indicating that the web page request is a malicious web page request or a tag indicating that the web page request is a non-malicious web page request.

In order to reduce the computation complexity and improve the speed for training the web page request identification model, an example of the present disclosure provides a method for identifying a web page request. The method is applicable to an electronic device such as a firewall device or a router. For illustrative purpose, an electronic device is taken as an execution subject as follows.

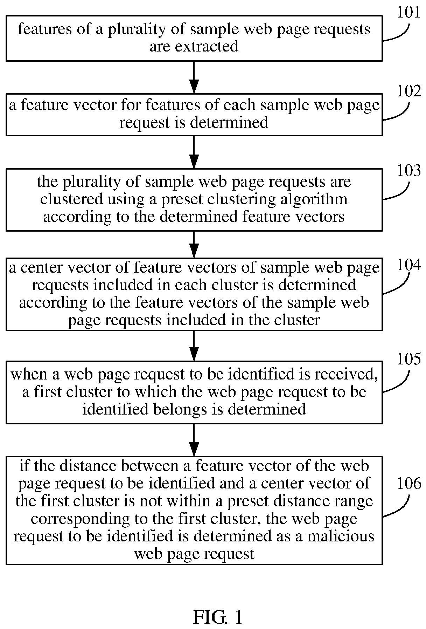

Referring to FIG. 1, FIG. 1 is a schematic diagram of a first flow chart of a method for identifying a web page request provided by an example of the present disclosure. The method includes the following operations.

At block 101, features of a plurality of sample web page requests are extracted.

In the technical solution provided by an example of the present disclosure, a web page request is used to access or acquire a network resource. The web page request may include a URL (Uniform Resource Locator) required for accessing or acquiring a network resource. By way of example, but not limitation, a web page request may be a URL.

In order to improve the accuracy and reliability of the web page request identification model, in the technical solution provided by an example of the present disclosure, it is desirable that the sample web page requests are as many as possible.

At block 102, a feature vector for features of each sample web page request is determined.

For each sample web page request, the electronic device extracts features from the sample web page request, and determines a feature vector for the extracted features of the sample web page request. For illustrative purpose, the feature vector for the features of the sample web page request below may be referred to as the feature vector of the sample web page request.

At block 103, the plurality of sample web page requests are clustered using a preset clustering algorithm according to the determined feature vectors.

In the technical solution provided by an example of the present disclosure, the preset clustering algorithm may be, but not limited to, a K-means algorithm, a mean shift clustering algorithm, a Gaussian mixture model based clustering algorithm, or the like.

In an example, the preset clustering algorithm is the K-means clustering algorithm. The electronic device clusters the plurality of sample web page requests using the K-means clustering algorithm according to the feature vectors of the plurality of sample web page requests, to obtain K clusters, where K is a positive integer. Each cluster includes feature vectors of one or more sample web page requests.

At block 104, a center vector of feature vectors of sample web page requests included in each cluster is determined according to the feature vectors of the sample web page requests included in the cluster.

The center vector of a cluster may be the average of the feature vectors of the sample web page requests included in the cluster.

For example, a cluster 1 includes a sample $URL_{a1}$ with a feature vector 1 and a sample $URL_{a2}$ a with feature vector 2. The feature vector 1 is $\{a_{11}, b_{12}, c_{13}\}$, and the feature vector 2 is $\{a_{21}, b_{22}, c_{23}\}$. At this point, the electronic device may determine that the center vector of the cluster 1 is $\{(a_{11}+a_{21})/2, (b_{12}+b_{22})/2, (c_{13}+c_{23})/2\}$.

At block 105, upon a web page request to be identified is obtained, a first cluster to which the web page request to be identified belongs is determined.

After the plurality of sample web page requests are clustered and the center vector of each cluster is determined, the electronic device may use the determined clusters together with the center vectors of all clusters as a web page request identification model. Then, a web page request to be identified may be identified to determine whether it is a malicious web page request or not, by using the web page request identification model.

In an example of the present disclosure, after receiving a web page request to be identified, the electronic device determines, from the determined clusters, a first cluster to which the web page request to be identified belongs.

In an example, when receiving a web page request to be identified, the electronic device may extract features of the web page request to be identified, and determine a feature vector of the web page request to be identified according to the extracted features. The electronic device calculates a distance between the feature vector of the web page request to be identified and the center vector of each of the determined clusters. The electronic device determines a cluster corresponding to the minimum distance in the calculated distances as the first cluster to which the web page request to be identified belongs.

At block 106, if the distance between a feature vector of the web page request to be identified and a center vector of the first cluster is not in a preset distance range corresponding to the first cluster, the web page request to be identified is determined as a malicious web page request.

In an example of the present disclosure, after determining the first cluster, the electronic device determines the preset distance range corresponding to the first cluster. Hereinafter, for illustrative purpose, the preset distance range corresponding to the first cluster is referred to as a target preset distance range, and the distance between the feature vector of the web page request to be identified and the center vector of the first cluster is referred to as a target distance.

If the target distance is within the target preset distance range, which indicates that the web page request to be identified accords with the regular pattern of most web page requests in the first cluster, the electronic device determines that the web page request to be identified is a non-malicious web page request. If the target distance is not within the target preset distance range, which indicates that the web page request to be identified does not accord with the regular pattern of most web page requests in the first cluster, the electronic device determines that the web page request to be identified is a malicious web page request.

In an example of the preset disclosure, the electronic device may not calculate the target preset distance range after the clustering of the sample web page requests is finished. The electronic device may calculate the target preset distance range, after receiving the web page request to be identified and determining the first cluster to which the web page request to be identified belongs. The electronic device does not need to determine preset distance ranges corresponding to other clusters than the first cluster, to reduce the computation of the electronic device.

In another example of the present disclosure, the electronic device may calculate a preset distance range corresponding to each cluster after the clustering of the sample web page requests is finished. The electronic device searches for the target preset distance range from preset distance ranges corresponding to the determined clusters, after receiving the web page request to be identified and determining the first cluster to which the web page request to be identified belongs. It is no longer necessary for the electronic device to calculate the target preset distance range after determining the first cluster to which the web page request to be identified belongs. This expedites the identification by the electronic device whether the web page request to be identified is a malicious web page request.

In the technical solution provided by an example of the present disclosure, the sample web page requests are clustered, and a center vector for the feature vectors of the sample web page requests included in each cluster is determined. Generally, most non-malicious web page requests have the same regular pattern. After the sample web page requests are clustered, the distribution of the non-malicious sample web page requests in one cluster is relatively concentrated, and the distance between the feature vector of a non-malicious sample web page request and the center vector of the cluster is within a certain distance range, i.e., the preset distance range. In the examples of the present disclosure, by using the clusters of the sample web page requests as the web page request identification model, the first cluster to which the web page request to be identified belongs is determined, and whether the web page request to be identified is a malicious web page request can be determined accurately, according to whether the distance between the feature vector of the web page request to be identified and the center vector of the first cluster is within the preset distance range corresponding to the first cluster. In this way, there is no need to train the web page request identification model by a great amount of tag data, thereby effectively reducing the computation complexity and improving the speed of training the web page request identification model.

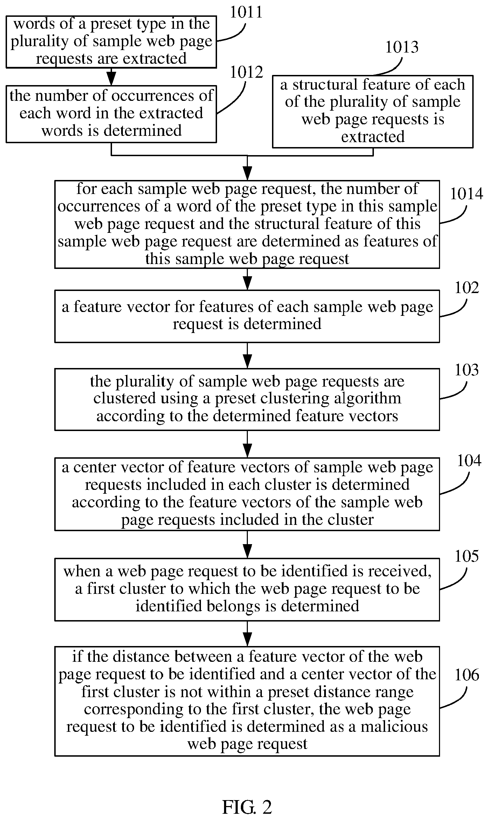

FIG. 2 shows a second flow chart of a method for identifying a web page request. In an example of the present disclosure, in this method, the extracting features of the sample web page requests at block 101 showed in FIG. 1 may be achieved through operations at blocks 1011-1014.

At block 1011, words of a preset type in the plurality of sample web page requests are extracted.

In an example of the present disclosure, the words of the preset type may include parameter names and parameter values. Here, parameter names and parameter values of non-malicious web page requests have a certain regular pattern, while parameter names and parameter values of malicious web page requests do not have a regular pattern. In view of this aspect, a parameter name and a parameter value can indicate to a certain extent whether the web page request is a malicious web page request, and the parameter name and the parameter value can be used as the features of the web page request.

At block 1012, the number of occurrences of each of the extracted words is determined.

In the technical solutions provided by the examples of the disclosure, the extracted words of the preset type can be stored in a preset storage region. This storage region may be referred to as a "bag of words". To determine the number of occurrences of each word in the extracted words, the electronic device may directly obtain the number of the same words from the bag of words, which is the number of occurrences of this word.

For example, 5 sample web page requests are obtained, which are $URL_{01}$, $URL_{02}$, $URL_{03}$, $URL_{04}$ and $URL_{05}$. The parameter names and parameter values extracted from the sample web page requests are:

{$URL_{01}$: parameter name a1, parameter value b1};

{$URL_{02}$: parameter name a2, parameter value b2};

{$URL_{03}$: parameter name a1, parameter value b3};

{$URL_{04}$: parameter name a4, parameter value b1}; and

{$URL_{05}$: parameter name a2, parameter value b2}.

It can be determined from the extracted words that the number of occurrences of the parameter name a1 is 2, the number of occurrences of the parameter name a2 is 2, the number of occurrences of the parameter name a4 is 1, the number of occurrences of the parameter value b1 is 2, the number of occurrences of the parameter value b2 is 2, and the number of occurrences of the parameter value b3 is 1.

At block 1013, a structural feature of each of the plurality of sample web page requests is extracted.

A web page request may be composed of information such as parameters, parameter values and the like. In the technical solutions provided by the examples of the present disclosure, after the sample web page requests are obtained, the structural feature of each sample web page request may be determined based on the information such as parameters and parameter values in the sample web page request.

In an example of the present disclosure, the structural feature of a web page request may include: the number of parameters, the average length of the parameter values, the maximum number of bytes of the parameter values, the average of the numbers of parameters in the sample web page requests with a same path, the average of the lengths of the parameter values in the sample web page requests with a same path, and the like.

The path of a web page request may be information before the last parameter of the web page request. If there are a plurality of "parameter=value" connected by "&" at the end of a web page request, the plurality of "parameter=value" connected by "&" together are referred to as the last parameter of the web page request. For example, $URL_{11}$ is: /tienda1/publico/autenticar.jsp?modo=entrar&login=quinn&pwd=incisivo&re member=off&B 1=Entrar

In this case, the last parameter of $URL_{11}$ is "modo=entrar&login=quinn&pwd=incisivo&remember=off&B 1=Entrar." The electronic device may determine that the path of $URL_{11}$ is "/tienda1/publico/autenticar.jsp."

At block 1014, for each sample web page request, the number of occurrences of a word of the preset type in this sample web page request and the structural feature of this sample web page request are determined as the features of this sample web page request.

In an example of the present disclosure, for each sample web page request, the electronic device determines both the number of occurrences of a word of the preset type in this sample web page request and the structural feature of this sample web page request as the features of this sample web page request.

For each sample web page request, after determining the features of the sample web page request, the electronic device may determine the feature vector of the sample web page request, according to the features of the sample web page request, i.e., both the number of occurrences of a word of the preset type in the sample web page request and the structural feature of the sample web page request. The feature vector can fully embody the characteristics of the sample web page request. The web page request identification model constructed by the feature vector improves the accuracy of identifying a web page request.

For example, a word of the preset type may include a parameter name and a parameter value. The electronic device has obtained 10 sample web page requests, which are $URL_{a11}$, $URL_{a12}$, $URL_{a13}$, $URL_{a14}$, $URL_{a15}$, $URL_{a16}$, $URL_{a17}$, $URL_{a18}$, $URL_{a19}$ and $URL_{a10}$. The paths of $URL_{a11}$, $URL_{a12}$ and $URL_{a13}$ are the same, and the paths of $URL_{a14}$, $URL_{a15}$, $URL_{a16}$ and $URL_{a17}$ are the same.

The electronic device respectively extracts the parameter names and the parameter values in $URL_{a11}$, $URL_{a12}$, $URL_{a13}$, $URL_{a14}$, $URL_{a15}$, $URL_{a16}$, $URL_{a17}$, $URL_{a18}$, $URL_{a19}$, and $URL_{a10}$ and determines the number of occurrences of each parameter name and the number of occurrences of each parameter value.

The electronic device respectively extracts the structural features of $URL_{a11}$, $URL_{a12}$, $URL_{a13}$, $URL_{a14}$, $URL_{a15}$, $URL_{a16}$, $URL_{a17}$, $URL_{a18}$, $URL_{a19}$ and $URL_{a10}$.

The electronic device determines that the number of occurrences of the parameter name in $URL_{a11}$ is 2, and the number of occurrences of the parameter value in $URL_{a11}$ is 1. Further, the electronic device determines that, for $URL_{a11}$, the number of parameters is 1, the average length of the parameter value is 10, the maximum number of bytes of the parameter value is 10, the average of the numbers of parameters in the plurality of sample web page requests having the same path with $URL_{a11}$ i.e., $URL_{a11}$, $URL_{a12}$ and $URL_{a13}$ is 3; and the average of the lengths of the parameter values in $URL_{a11}$, $URL_{a12}$ and $URL_{a13}$ is 8. Then, the electronic device may determine the feature vector of $URL_{a11}$ is {2, 1, 1, 10, 10, 3, 8}.

Similarly, the electronic device can determine the feature vectors of $URL_{a12}$, $URL_{a13}$, $URL_{a14}$, $URL_{a15}$, $URL_{a36}$, $URL_{a17}$, $URL_{a18}$, $URL_{a19}$ and $URL_{a10}$.

In an example of the present disclosure, after determining the feature vector of each of the sample web page requests, the electronic device clusters the plurality of sample web page requests using a preset clustering algorithm, which may be the K-means algorithm. In clustering the plurality of sample web page requests by the K-means algorithm and determining the center vector of each cluster, the electronic device first presets K center vectors. For each sample web page request, the electronic device calculates the distances between the feature vector of the sample web page request and the K center vectors; determines a first center vector corresponding to the minimum distance in the calculated distances and a cluster corresponding to the first center vector; and determines the cluster corresponding to the first center vector as the cluster to which the sample web page request belongs. After this clustering of the plurality of sample web page requests is finished, for each cluster, the electronic device calculates an average of the feature vectors of the sample web page requests included in this cluster, and uses the average as the center vector of this cluster. In this way, the K center vectors are redetermined.

Subsequently, the electronic device does iteration. Specifically, the electronic device repeatedly performs the following operations. For each sample web page request, the electronic device calculates the distances between the feature vector of the sample web page request and the K center vectors; determines a first center vector corresponding to the minimum distance in the calculated distances and a cluster corresponding to the first center vector; and determines the cluster corresponding to the first center vector as the cluster to which the sample web page request belongs. After this clustering of the plurality of sample web page requests is finished, for each cluster, the electronic device calculates an average of the feature vectors of the sample web page requests included in this cluster, and uses the average as the center vector of this cluster. The above operations are performed repeatedly until the deviation between the center vector of each cluster and the previously determined center vector of this cluster is less than or equal to a preset deviation threshold. In this way, the center vector of each cluster is updated through the iteration, obtaining a better clustering result.

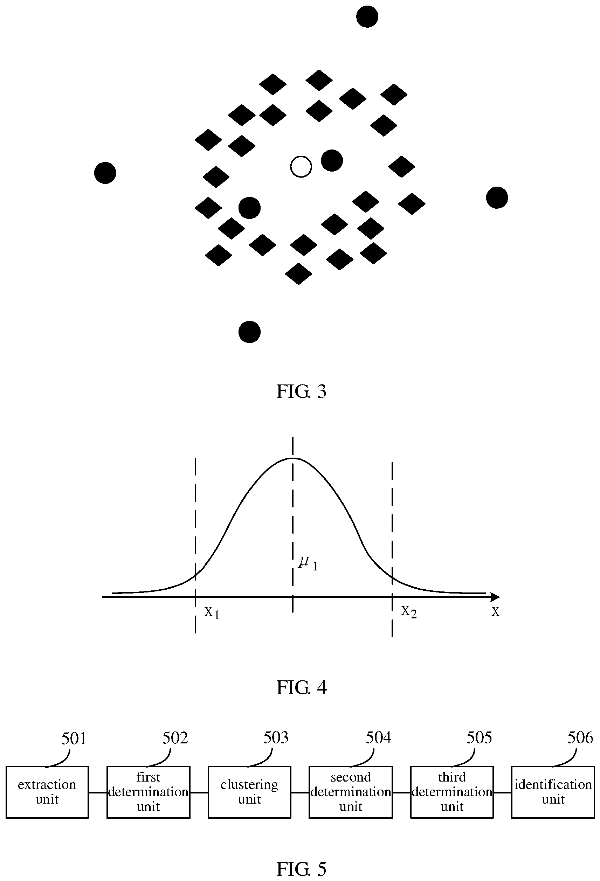

Most non-malicious web page requests have the same regular pattern. For example, in the clustering result shown in FIG. 3, the distribution of feature vectors of non-malicious sample web page requests is more concentrated. Specifically, the result of clustering sample web page requests is as shown in FIG. 3. The hollow circle represents the center vector of the cluster, and the others represent the feature vectors of the sample web page requests. The feature vectors of non-malicious sample web page requests in a cluster are concentratedly distributed. The distances between the feature vectors of non-malicious sample web page requests, such as the solid diamonds shown in FIG. 3, and the center vector of the cluster are within a certain distance range. The feature vectors of malicious sample web page requests are scattered. The distances between the feature vectors of malicious sample web page requests, such as the solid circles shown in FIG. 3, and the center vector of the cluster may be either short or long.

After clustering the sample web page requests and determining the center vector of each cluster, for each cluster, the electronic device may preset a range for a distance between a feature vector of a non-malicious web page request and the center vector of this cluster according to the distribution of the feature vectors of the sample web page requests included in this cluster.

In an example of the present disclosure, the electronic device may preset a distance range corresponding to each cluster according to a normal distribution.

Specifically, the electronic device calculates the distance between the center vector of a cluster and the feature vector of each of the web page requests in the cluster, determines a first average and a first variance of the calculated plurality of distances, and in turn creates a normal distribution for the cluster based on the first average and the first variance.

After creating the normal distribution for the cluster, the electronic device may determine a first position and a second position, which satisfy a first preset condition, on the horizontal axis of the coordinate system in which the normal distribution for the cluster is located. The first preset condition includes: the first position and the second position are symmetric relative to an axis whose abscissa equals to the first average, and a probability that a distance corresponding to any sample web page request in the cluster is between the first location and the second location is a first preset probability. Here, the distance corresponding to any sample web page request in the cluster is a distance between a feature vector of this sample web page request and the center vector of the cluster.

The electronic device determines an interval defined by the first location and the second location as the preset distance range corresponding to the cluster.

In an example of the present disclosure, in order to improve the accuracy of identification of a web page request, after calculating the first average and the first variance of a cluster, the electronic device may create a normal distribution for the cluster according to the first average and the first variance of the cluster, and use the normal distribution as a transitional normal distribution. Subsequently, the electronic device determines a third position and a fourth position, which satisfy a second preset condition, on the horizontal axis of the coordinate system in which the transitional normal distribution is located. The second preset condition includes: the third position and the fourth position are symmetric relative to an axis whose abscissa equals to the first average, and a probability that a distance corresponding to any sample web page request in the cluster is between the third location and the fourth location is a second preset probability.

After obtaining the transitional normal distribution and determining the third and fourth locations, the electronic device may remove a sample web page request in the cluster which does not satisfy the following formula (1):

$$\delta_1 < x < \delta_2; \qquad (1)$$

where x is the distance between a feature vector of a sample web page request in the cluster and the center vector of the cluster, $\delta_1$ is the third position, and $\delta_2$ is the fourth position.

After removing sample web page requests that do not satisfy the formula (1), the electronic device redetermines the center vector of the cluster according to the feature vectors of the remaining sample web page requests in the cluster. The electronic device recalculates the distance between the redetermined center vector of the cluster and the feature vector of each remaining sample web page request in the cluster. The electronic device determines a second average and a second variance of the recalculated plurality of distances, and then creates a normal distribution for the cluster according to the second average and the second variance.

The sample web page requests that do not satisfy the formula (1) are discrete sample web page requests in the cluster. It can be considered that these discrete sample web page requests do not accord with the regular pattern of the concentratedly distributed sample web page requests in the cluster, that is, these discrete sample web page requests can be considered as malicious web page requests. The remaining sample web page requests in the cluster after the sample web page requests that do not satisfy the formula (1) are removed may be considered as non-malicious web page requests. The normal distribution for the cluster is recreated using the non-malicious web page requests, which can effectively improve the accuracy of identification of a web page request.

The second preset probability may be greater than the first preset probability, so that as many sample web page requests as possible remain after malicious web page requests are removed, thereby making the normal distribution subsequently created more reasonable. The second preset probability may also be no greater than the first preset probability, so as to eliminate as many malicious sample web page requests as possible, thereby making the normal distribution subsequently created more reasonable.

In an example of the present disclosure, the operations of removing the sample web page requests that do not satisfy the formula (1) from the cluster and creating the normal distribution for the cluster may be performed multiple times, so as to eliminate malicious web page requests from the cluster as much as possible, and improve the accuracy of identification of a web page request. In an example of the present disclosure, after obtaining a web page request to be identified, the electronic device identifies the web page request to be identified, and determines whether the web page request to be identified is a malicious web page request.

Specifically, the reference may be made to the following example. For illustrative purpose, the cluster to which the web page request to be identified belongs is the first cluster. Hereinafter, the preset distance range corresponding to the first cluster is referred to as a target preset distance range, and the distance between the feature vector of the web page request to be identified and the center vector of the first cluster is referred to as a target distance.

In the example, when receiving the web page request to be identified, the electronic device extracts the features of the web page request to be identified, for example, the number of occurrences of a parameter name and a parameter value of the web page request to be identified in the bag of words, the structural feature of the web page request to be identified, and the like.

The electronic device determines the feature vector of the web page request to be identified according to the extracted features.

The electronic device calculates a distance between a feature vector of the web page request to be identified and a center vector of each of the determined clusters; determines a cluster corresponding to the minimum distance in the calculated distances as the first cluster to which the web page request to be identified belongs; and then determines the preset distance range corresponding to the first cluster, i.e., the target preset distance range.

If the target distance is within the target preset distance range, which indicates that the web page request to be identified accords with the regular pattern of most web page requests in the first cluster, the web page request to be identified is determined as a non-malicious web page request. If the target distance is not within the target preset distance range, which indicates that the web page request to be identified does not accord with the regular pattern of most web page requests in the first cluster, the web page request to be identified is determined as a malicious web page request.

This will be described below in conjunction with a specific example.

The electronic device obtains 1000 sample web page requests, which are URL1-URL1000. A word of the preset type includes a parameter name and a parameter value. The preset clustering algorithm is the K-means algorithm, where K=10, that is, 10 center vectors are preset.

1. The electronic device extracts parameter names and parameter values from the $URL_1$-$URL_{1000}$, and places the extracted parameter names and parameter values into the bag of words.

2. The electronic device determines the number of occurrences of each parameter name and the number of occurrences of each parameter value in the bag of words.

3. The electronic device extracts a structural feature of each of $URL_1$-$URL_{1000}$.

4. For each sample web page request, the electronic device determines the structural feature of the sample web page request and the number of occurrences of the parameter name and the parameter value in the sample web page request as features of the sample web page request.

For example, the determination of the features of $URL_1$ is described below. The number of occurrences of a parameter name of $URL_1$ in the bag of words is 45, the number of occurrences of a parameter value of $URL_1$ in the bag of words is 80, the number of parameters of $URL_1$ is 1, the average length of the parameter value of $URL_1$ is 9, the maximum number of bytes in the parameter value of $URL_1$ is 10; and the average of the numbers of parameters in multiple sample web page requests having a same path with $URL_1$ is 2, and the average of the lengths of parameter values in multiple sample web page requests having a same path with $URL_1$ is 8. All these above are used as the features of $URL_1$.

5. The electronic device determines a feature vector for the features of each of $URL_1$-$URL_{1000}$, namely, determines

the feature vector of each of $URL_1$-$URL_{1000}$.

Taking $URL_1$ as an example again, the electronic device may determine that the feature vector of $URL_1$ is {45, 80, 1, 9, 10, 2, 8}.

6. The electronic device clusters $URL_1$-$URL_{1000}$ based on the determined feature vectors of $URL_1$-$URL_{1000}$ by using the K-means algorithm, and determines a center vector of each cluster.

In this example, 10 center vectors are preset. For each of sample web page requests $URL_1$-$URL_{1000}$, the electronic device calculates the distances between the feature vector of the sample web page request and the 10 center vectors; determines a first center vector corresponding to the minimum distance in the calculated distances and a cluster corresponding to the first center vector; and determines the cluster corresponding to the first center vector as the cluster to which the sample web page request belongs. After this clustering of $URL_1$-$URL_{1000}$ is finished, for each cluster, the electronic device calculates an average of the feature vectors of the sample web page requests included in this cluster, and uses the average as the center vector of this cluster. In this way, the 10 center vectors are redetermined.

Subsequently, the electronic device does iteration. Specifically, the following operations are repeated. For each of sample web page requests $URL_1$-$URL_{1000}$. the electronic device calculates the distances between the feature vector of the sample web page request and the 10 center vectors; determines a first center vector corresponding to the minimum distance in the calculated distances and a cluster corresponding to the first center vector; and uses the cluster corresponding to the first center vector as the cluster to which the sample web page request belongs. After this clustering of $URL_1$-$URL_{1000}$ is finished, for each cluster, the electronic device calculates an average of the feature vectors of the sample web page requests included in this cluster, and uses the average as the center vector of this cluster. The above operations are performed repeatedly until the deviation between the center vector of each cluster and the previously determined center vector of this cluster is less than or equal to a preset deviation threshold.

It is assumed that the final clustering result includes 10 clusters, which are:

cluster L1 including $URL_1$-$URL_{100}$ and having a center vector Q1;

cluster L2 including $URL_{101}$-$URL_{190}$ and having a center vector Q2;

cluster L3 including $URL_{191}$-$URL_{299}$ and having a center vector Q3;

cluster L4 including $URL_{300}$- $URL_{410}$ and having a center vector Q4;

cluster L5 including $URL_{411}$-$URL_{480}$ and having a center vector Q5;

cluster L6 including $URL_{481}$-$URL_{550}$ and having a center vector Q6;

cluster L7 including $URL_{551}$-$URL_{750}$ and having a center vector Q7;

cluster L8 including $URL_{751}$-$URL_{800}$ and having a center vector Q8;

cluster L9 including $URL_{801}$-$URL_{940}$ and having a center vector Q9; and

cluster L10 including $URL_{941}$-$URL_{1000}$ and having a center vector Q10.

For illustrative purpose, the cluster L1 is taken as an example for description below.

7. The electronic device respectively calculates distances between the center vector Q1 of the cluster L1 and the feature vector of $URL_1$-$URL_{100}$, which are respectively $d_1$-$d_{100}$. If the average of the distances $d_1$-$d_{100}$ is $\mu_1$ and the variance thereof is $\sigma_1^2$, the electronic device may create a normal distribution $N(\mu_1, \sigma_1^2)$ for the cluster L1, such as the normal distribution for the cluster L1 shown in FIG. 4.

The process at 7 may be performed for some of the 10 clusters, or may not be performed. This is not limited herein.

8. The electronic device uses the normal distribution $N(\mu_1, \sigma_1^2)$ as the transitional normal distribution, such as the normal distribution for the cluster L1 shown in FIG. 4. If the second preset probability is 90%, the electronic device determines $x_1$ and $x_2$ symmetrically located on both sides of $x=\mu_1$, wherein a probability that a distance corresponding to any sample web page request in the cluster L1 is between $x_1$ and $x_2$ is 90%.

The second preset probability may be selected from a large range of probabilities, such as a range of 70%-95%. The axis at $x=\mu_1$ in FIG. 4 is the central axis on the horizontal axis of the coordinate system in which the transitional normal distribution for the cluster L1 is located.

9. If the distances d1, d2, d3, d4 and d5 between the center vector Q1 of the cluster L1 and the feature vectors of $URL_1$, $URL_2$, $URL_3$, $URL_4$ and $URL_5$ are not in the interval $x_1$-$x_2$, namely, d1, d2, d3, d4 and d5 are less than $x_1$ or greater than $x_2$, the electronic device removes $URL_1$, $URL_2$, $URL_3$, $URL_4$ and $URL_5$ from the cluster L1. At this time, the remaining sample web page requests in the cluster L1 are $URL_6$-$URL_{100}$.

10. The electronic device calculates the average of the feature vectors of $URL_6$-$URL_{100}$, which is used as the center vector Q1 of the cluster L1.

In an example of the present disclosure, the electronic device may perform the processes at 7-10 multiple times, to remove malicious web page requests in the cluster L1 as much as possible, and improve the accuracy of identification of a web page request.

11. The electronic device respectively calculates the distances between the center vector Q1 of the cluster L1 and the feature vector of $URL_6$-$URL_{100}$, which are respectively $D_6$-$D_{100}$. If the average of the distances $D_6$-$D_{100}$ is $\mu_2$ and the variance thereof is $\sigma_2^2$, the electronic device may create a normal distribution $N(\mu_2, \sigma_2^2)$ for the cluster L1.

12. If the first preset probability is 80%, the electronic device determines $x_3$ and $x_4$ symmetrically located on both sides of $x=\mu_2$, and determines the interval $x_3$-$x_4$ as the preset distance range corresponding to the cluster L1. A probability that a distance corresponding to any sample web page request in the cluster L1 is between $x_3$ and $x_4$ is 80%.

The first preset probability may be selected from a large range of probabilities, such as a range of 70%-95%. The axis at $x=\mu_2$ is the central axis on the horizontal axis of the coordinate system in which the normal distribution for the cluster L1 is located.

13. Upon receiving a web page request to be identified, the electronic device extracts features of the web page request to be identified, and determines a feature vector of the web page request to be identified according to the extracted features. The electronic device calculates a distance between a feature vector of the web page request to be identified and a center vector of each of the determined clusters. If a cluster corresponding to the minimum distance in the calculated distances is L1, the electronic device determines that the web page request to be identified belongs to the cluster L1. The electronic device calculates the distance d' between the feature vector of the web page request to be identified and the center vector Q1 of the cluster L1.

14. If d' is within the interval $x_3$-$x_4$, the electronic device determines that the web page request to be identified is a non-malicious web page request. If d' is not within the interval $x_3$-$x_4$, the electronic device determines that the web page request to be identified is a malicious web page request.

After the process at 6, the processes at 7-10 may be performed to determine a preset distance range corresponding to each cluster. The processes at 7-10 may not be performed after the process at 6. Instead, after the web page request to be identified is determined to belong to the cluster L1, the processes at 7-10 are performed to determine that the web page request to be identified fall into the preset distance range corresponding to the cluster L1.

Corresponding to the example of the method for identifying a web page request, an example of the present disclosure further provides an apparatus for identifying a web page request. Referring to FIG. 5, FIG. 5 is a schematic diagram of the structure of an apparatus for identifying a web page request provided by an example of the present application. The apparatus includes an extraction unit 501, a first determination unit 502, a clustering unit 503, a second determination unit 504, a third determination unit 505, and an identification unit 506.

The extraction unit 501 is to extract features of a plurality of sample web page requests.

The first determination unit 502 is to determine a feature vector for features of each sample web page request.

The clustering unit 503 is to cluster the plurality of sample web page requests using a preset clustering algorithm according to the determined feature vectors.

The second determination unit 504 is to determine a center vector of feature vectors of sample web page requests included in each cluster according to the feature vectors of the sample web page requests included in this cluster.

The third determination unit 505 is to determine a first cluster to which a web page request to be identified belongs, when the web page request to be identified is received.

The identification unit 506 is to determine the web page request to be identified as a malicious web page request, if a distance between a feature vector of the web page request to be identified and a center vector of the first cluster is not within a preset distance range corresponding to the first cluster.

In an example of the present disclosure, the apparatus for identifying a web page request may further include a calculation unit, a fourth determination unit, a creation unit, a fifth determination unit, and a sixth determination unit.

The calculation unit is to calculate a distance between the center vector of the first cluster and a feature vector of each of sample web page requests included in the first cluster.

The fourth determination unit is to determine a first average and a first variance of the calculated distances.

The creation unit is to create a normal distribution for the first cluster according to the first average and the first variance.

The fifth determination unit is to determine a first position and a second position, which satisfy a first preset condition, on the horizontal axis of a coordinate system in which the normal distribution for the first cluster is located. The first preset condition includes: the first position and the second position are symmetric relative to an axis whose abscissa equals to the first average, and a probability that a distance corresponding to any sample web page request in the first cluster is between the first location and the second location is a first preset probability. The distance corresponding to any sample web page request in the first cluster is a distance between a feature vector of this sample web page request and the center vector of the first cluster.

The sixth determination unit is to determine an interval defined by the first location and the second location as the preset distance range corresponding to the first cluster.

In an example of the present disclosure, the creation unit may be to:

create a transitional normal distribution for the first cluster according to the first average and the first variance;

determine a third position and a fourth position, which satisfy a second preset condition, on the horizontal axis of a coordinate system in which the transitional normal distribution for the first cluster is located. The second preset condition includes: the third position and the fourth position are symmetric relative to an axis whose abscissa equals to the first average, and a probability that a distance corresponding to any sample web page request in the first cluster is between the third location and the fourth location is a second preset probability;

remove a sample web page request in the first cluster that does not satisfy the following formula:

$$\delta_1 < x < \delta_2;$$

where x is a distance between a feature vector of a sample web page request included in the first cluster and the center vector of the first cluster, $\delta_1$ is the third position, and $\delta_2$ is the fourth position;

redetermine a center vector of the first cluster according to feature vectors of remaining sample web page requests included in the first cluster;

recalculate a distance between the redetermined center vector of the first cluster and a feature vector of each of the remaining sample web page requests included in the first cluster;

determine a second average and a second variance of the recalculated distances; and

create the normal distribution for the first cluster according to the second average and the second variance.

In an example of the present disclosure, the third determination unit 505 may be to:

extract features of the web page request to be identified when the web page request to be identified is received;

determine a feature vector of the web page request to be identified;

calculate a distance between the feature vector of the web page request to be identified and a center vector of each cluster; and

determine a cluster corresponding to the minimum distance in the calculated distances as the first cluster to which the web page request to be identified belongs.

In an example of the present disclosure, the extraction unit 501 may be to:

extract words of a preset type in the plurality of sample web page requests;

determine the number of occurrences of each word in the extracted words;

extract a structural feature of each of the plurality of sample web page requests; and

for each sample web page request, determine the number of occurrences of a word of the preset type in this sample web page request and the structural feature of this sample web page request as features of this sample web page request.

In an example of the present disclosure, the extraction unit 501 may be to:
extract parameter names and parameter values in the plurality of sample web page requests.

In an example of the present disclosure, the extraction unit 501 may be to:
for each sample web page request, extract the number of parameters, the average length of parameter values, and the maximum number of bytes of the parameter values in this sample web page request, and extract an average of the numbers of parameters and an average of lengths of parameter values in sample web page requests having the same path as this sample web page request.

In the technical solution provided by an example of the present disclosure, the sample web page requests are clustered, and a center vector of the feature vectors of the sample web page requests included in each cluster is determined. Most non-malicious web page requests have the same regular pattern. After the sample web page requests are clustered, the distribution of the non-malicious sample web page requests in one cluster is concentrated. The distance between the feature vector of a non-malicious sample web page request and the center vector of the cluster is within a certain distance range, i.e., the preset distance range. Thus, by using the clusters of the sample web page requests as the web page request identification model, the first cluster to which the web page request to be identified belongs is determined, and whether the web page request to be identified is a malicious web page request can be determined accurately, according to whether the distance between the feature vector of the web page request to be identified and the center vector of the first cluster is within the preset distance range corresponding to the first cluster. In this way, there is no need to train the web page request identification model by a great amount of tag data, thereby effectively reducing the computation complexity and improving the speed of training the web page request identification model.

Corresponding to the examples of the method for identifying a web page request and the apparatus for identifying a web page request, an example of the present application further provides an electronic device, including a processor and a machine readable storage medium. The machine readable storage medium stores machine executable instructions that can be executed by the processor. The processor is caused by the machine executable instructions to implement any operation of the method for identifying a web page request.

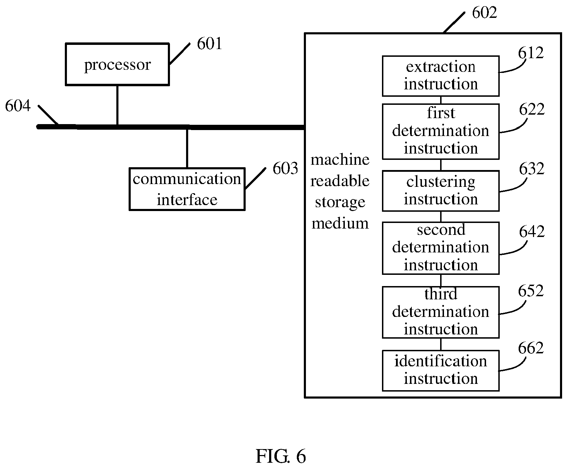

FIG. 6 is a schematic diagram of the structure of an electronic device provided by an example of the present application. The electronic device includes a processor 601 and a machine readable storage medium 602. The machine readable storage medium 602 stores machine executable instructions that can be executed by the processor 601.

In an example of the disclosure, the machine executable instructions include a extraction instruction 612, a first determination instruction 622, a clustering instruction 632, a second determination instruction 642, a third determination instruction 652, and an identification instruction 662.

The processor 601 is caused by the extraction instruction 612 to extract features of a plurality of sample web page requests.

The processor 601 is caused by the first determination instruction 622 to determine a feature vector for features of each sample web page request.

The processor 601 is caused by the clustering instruction 632 to cluster the plurality of sample web page requests using a preset clustering algorithm according to the determined feature vectors.

The processor 601 is caused by the second determination instruction 642 to determine a center vector of feature vectors of sample web page requests included in each cluster according to the feature vectors of the sample web page requests included in this cluster.

The processor 601 is caused by the third determination instruction 652 to determine a first cluster to which a web page request to be identified belongs, when the web page request to be identified is received.

The processor 601 is caused by the identification instruction 662 to determine the web page request to be identified as a malicious web page request, if a distance between a feature vector of the web page request to be identified and a center vector of the first cluster is not within a preset distance range corresponding to the first cluster.

In an example of the present disclosure, the machine executable instructions may further include a calculation instruction, a fourth determination instruction, a creation instruction, a fifth determination instruction, and a sixth determination instruction.

The processor 601 is caused by the calculation instruction to calculate a distance between the center vector of the first cluster and a feature vector of each of sample web page requests included in the first cluster.

The processor 601 is caused by the fourth determination instruction to determine a first average and a first variance of the calculated distances.

The processor 601 is caused by the creation instruction to create a normal distribution for the first cluster according to the first average and the first variance.

The processor 601 is caused by the fifth determination instruction to determine a first position and a second position, which satisfy a first preset condition, on the horizontal axis of a coordinate system in which the normal distribution for the first cluster is located, wherein the first preset condition includes: the first position and the second position are symmetric relative to an axis whose abscissa equals to the first average, and a probability that a distance corresponding to any sample web page request in the first cluster is between the first location and the second location is a first preset probability, and wherein the distance corresponding to any sample web page request in the first cluster is a distance between a feature vector of this sample web page request and the center vector of the first cluster.

The processor 601 is caused by the sixth determination instruction to determine an interval defined by the first location and the second location as the preset distance range corresponding to the first cluster.

In an example of the present disclosure, the processor 601 may be caused by the creation instruction to:

create a transitional normal distribution for the first cluster according to the first average and the first variance;

determine a third position and a fourth position, which satisfy a second preset condition, on the horizontal axis of a coordinate system in which the transitional normal distribution for the first cluster is located, wherein the second preset condition includes: the third position and the fourth position are symmetric relative to an axis whose abscissa equals to the first average, and a probability that a distance corresponding to any sample web page request in the first cluster is between the third location and the fourth location is a second preset probability;

remove a sample web page request in the first cluster that does not satisfy the following formula:

$$\delta_1 < x < \delta_2;$$

where x is a distance between a feature vector of a sample web page request included in the first cluster and the center vector of the first cluster, $\delta_1$ is the third position, and $\delta_2$ is the fourth position;

redetermine a center vector of the first cluster according to feature vectors of remaining sample web page requests included in the first cluster;

recalculate a distance between the redetermined center vector of the first cluster and a feature vector of each of the remaining sample web page requests included in the first cluster;

determine a second average and a second variance of the recalculated distances; and

create the normal distribution for the first cluster according to the second average and the second variance.

In an example of the present disclosure, the processor 601 may be caused by the third determination instruction 652 to:

extract features of the web page request to be identified when the web page request to be identified is received;

determine a feature vector of the web page request to be identified;

calculate a distance between the feature vector of the web page request to be identified and a center vector of each cluster; and

determine a cluster corresponding to the minimum distance in the calculated distances as the first cluster to which the web page request to be identified belongs.

In an example of the present disclosure, the processor 601 may be caused by the extraction instruction 612 to:

extract words of a preset type in the plurality of sample web page requests;

determine the number of occurrences of each word in the extracted words;

extract a structural feature of each of the plurality of sample web page requests; and

for each sample web page request, determine the number of occurrences of a word of the preset type in this sample web page request and the structural feature of this sample web page request as features of this sample web page request.

In an example of the present disclosure, the processor 601 may be caused by the extraction instruction 612 to:

extract parameter names and parameter values in the plurality of sample web page requests.

In an example of the present disclosure, the processor 601 may be caused by the extraction instruction 612 to: for each sample web page request, extract the number of parameters, the average length of parameter values, and the maximum number of bytes of the parameter values in this sample web page request, and extract an average of the numbers of parameters and an average of lengths of parameter values in sample web page requests having the same path as this sample web page request.

In the technical solution provided by an example of the present disclosure, the sample web page requests are clustered, and a center vector of the feature vectors of the sample web page requests included in each cluster is determined. Most non-malicious web page requests have the same regular pattern. After the sample web page requests are clustered, the distribution of the non-malicious sample web page requests in one cluster is concentrated. The distance between the feature vector of a non-malicious sample web page request in the cluster and the center vector of the cluster is within a certain distance range, i.e., the preset distance range. Thus, by using the clusters of the sample web page requests as the web page request identification model, the first cluster to which the web page request to be identified belongs is determined, and whether the web page request to be identified is a malicious web page request can be determined accurately, according to whether the distance between the feature vector of the web page request to be identified and the center vector of the first cluster is within the preset distance range corresponding to the first cluster. In this way, there is no need to train the web page request identification model by a great amount of tag data, thereby effectively reducing the computation complexity and improving the speed of training the web page request identification model.

In addition, as shown in FIG. 6, the electronic device may further include a communication interface 603 and a communication bus 604. The processor 601, the machine readable storage medium 602, and the communication interface 603 communicate with each other over the communication bus 604. The above electronic device communicates with other devices through the communication interface 603.

The communication bus 604 may be a PCI (Peripheral Component Interconnect) bus or an EISA (Extended Industry Standard Architecture) bus, or the like. The communication bus 604 may include an address bus, a data bus, a control bus, or the like. For ease of representation, only one thick line is shown in FIG. 6, but it does not mean that there is only one bus or one type of bus.

The machine readable storage medium 602 may include a RAM (Random Access Memory), and may also include a NVM (Non-Volatile Memory), such as at least one disk storage. In addition, the machine readable storage medium 602 may also be at least one storage device located remotely from the above processor.

The processor 601 may be a general processor, including a CPU (Central Processing Unit), an NP (Network Processor), or the like. It may also be a DSP (Digital Signal Processing), an ASIC (Application Specific Integrated Circuit), an FPGA (Field-Programmable Gate Array) or other programmable logic devices, discrete gates or transistor logic devices, discrete hardware components.

Corresponding to the examples of the method for identifying a web page request and the apparatus for identifying a web page request, an example of the present application further provides a machine readable storage medium storing machine executable instructions which, when being called and executed by the processor, cause the processor to implement any operation of the method for identifying a web page request.

The machine executable instructions include a extraction instruction, a first determination instruction, a clustering instruction, a second determination instruction, a third determination instruction, and an identification instruction.

When being called and executed by the processor, the extraction instruction causes the processor to extract features of a plurality of sample web page requests.

When being called and executed by the processor, the first determination instruction causes the processor to determine a feature vector for features of each sample web page request.

When being called and executed by the processor, the clustering instruction causes the processor to cluster the plurality of sample web page requests using a preset clustering algorithm according to the determined feature vectors.

When being called and executed by the processor, the second determination instruction causes the processor to determine a center vector of feature vectors of sample web page requests included in each cluster according to the feature vectors of the sample web page requests included in this cluster.

When being called and executed by the processor, the third determination instruction causes the processor to determine a first cluster to which a web page request to be identified belongs, when the web page request to be identified is received.

When being called and executed by the processor, the identification instruction causes the processor to determine the web page request to be identified as a malicious web page request, if a distance between a feature vector of the web page request to be identified and a center vector of the first cluster is not within a preset distance range corresponding to the first cluster.

In an example of the present disclosure, the machine executable instructions may further include a calculation instruction, a fourth determination instruction, a creation instruction, a fifth determination instruction, and a sixth determination instruction.

When being called and executed by the processor, the calculation instruction causes the processor to calculate a distance between the center vector of the first cluster and a feature vector of each of sample web page requests included in the first cluster.

When being called and executed by the processor, the fourth determination instruction causes the processor to determine a first average and a first variance of the calculated distances.

When being called and executed by the processor, the creation instruction causes the processor to create a normal distribution for the first cluster according to the first average and the first variance.

When being called and executed by the processor, the fifth determination instruction causes the processor to determine a first position and a second position, which satisfy a first preset condition, on the horizontal axis of a coordinate system in which the normal distribution for the first cluster is located, wherein the first preset condition includes: the first position and the second position are symmetric relative to an axis whose abscissa equals to the first average, and a probability that a distance corresponding to any sample web page request in the first cluster is between the first location and the second location is a first preset probability, and wherein the distance corresponding to any sample web page request in the first cluster is a distance between a feature vector of this sample web page request and the center vector of the first cluster.

When being called and executed by the processor, the sixth determination instruction causes the processor to determine an interval defined by the first location and the second location as the preset distance range corresponding to the first cluster.

In an example of the present disclosure, when being called and executed by the processor, the creation instruction may cause the processor to:

create a transitional normal distribution for the first cluster according to the first average and the first variance;

determine a third position and a fourth position, which satisfy a second preset condition, on the horizontal axis of a coordinate system in which the transitional normal distribution for the first cluster is located, wherein the second preset condition includes: the third position and the fourth position are symmetric relative to an axis whose abscissa equals to the first average, and a probability that a distance corresponding to any sample web page request in the first cluster is between the third location and the fourth location is a second preset probability;

remove a sample web page request in the first cluster that does not satisfy the following formula:

$$\delta_1 < x < \delta_2;$$

where x is a distance between a feature vector of a sample web page request included in the first cluster and the center vector of the first cluster, $\delta_1$ is the third position, and $\delta_2$ is the fourth position;

redetermine a center vector of the first cluster according to feature vectors of remaining sample web page requests included in the first cluster;

recalculate a distance between the redetermined center vector of the first cluster and a feature vector of each of the remaining sample web page requests included in the first cluster;

determine a second average and a second variance of the recalculated distances; and

create the normal distribution for the first cluster according to the second average and the second variance.

In an example of the present disclosure, when being called and executed by the processor, the third determination instruction may cause the processor to:

extract features of the web page request to be identified when the web page request to be identified is received;

determine a feature vector of the web page request to be identified;

calculate a distance between the feature vector of the web page request to be identified and a center vector of each cluster; and

determine a cluster corresponding to the minimum distance in the calculated distances as the first cluster to which the web page request to be identified belongs.

In an example of the present disclosure, when being called and executed by the processor, the extraction instruction may cause the processor to:

extract words of a preset type in the plurality of sample web page requests;

determine the number of occurrences of each word in the extracted words;

extract a structural feature of each of the plurality of sample web page requests; and

for each sample web page request, determine the number of occurrences of a word of the preset type in this sample web page request and the structural feature of this sample web page request as features of this sample web page request.

In an example of the present disclosure, when being called and executed by the processor, the extraction instruction may cause the processor to:
extract parameter names and parameter values in the plurality of sample web page requests.

In an example of the present disclosure, when being called and executed by the processor, the extraction instruction may cause the processor to:
for each sample web page request, extract the number of parameters, the average length of parameter values, and the maximum number of bytes of the parameter values in this sample web page request, and extract an average of the numbers of parameters and an average of lengths of parameter values in sample web page requests having the same path as this sample web page request.

In the technical solution provided by an example of the present disclosure, the sample web page requests are clustered, and a center vector of the feature vectors of the sample web page requests included in each cluster is determined. Most non-malicious web page requests have the same regular pattern. After the sample web page requests are clustered, the distribution of the non-malicious sample web page requests in one cluster is concentrated. The distance between the feature vector of a non-malicious sample web page request in the cluster and the center vector of the cluster is within a certain distance range, i.e., the preset distance range. Thus, by using the clusters of the sample web page requests as the web page request identification model, the first cluster to which the web page request to be identified belongs is determined, and whether the web page request to be identified is a malicious web page request can be determined accurately, according to whether the distance between the feature vector of the web page request to be identified and the center vector of the first cluster is within the preset distance range corresponding to the first cluster. In this way, there is no need to train the web page request identification model by a great amount of tag data, thereby effectively reducing the computation complexity and improving the speed of training the web page request identification model.

Corresponding to the examples of the method for identifying a web page request and the apparatus for identifying a web page request, an example of the present disclosure further provides machine executable instructions that cause the processor to implement any operation of the method for identifying a web page request.

In an example of the disclosure, the machine executable instructions include a extraction instruction, a first determination instruction, a clustering instruction, a second determination instruction, a third determination instruction, and an identification instruction.

The processor is caused by the extraction instruction to extract features of a plurality of sample web page requests.

The processor is caused by the first determination instruction to determine a feature vector for features of each sample web page request.

The processor is caused by the clustering instruction to cluster the plurality of sample web page requests using a preset clustering algorithm according to the determined feature vectors.

The processor is caused by the second determination instruction to determine a center vector of feature vectors of sample web page requests included in each cluster according to the feature vectors of the sample web page requests included in this cluster.

The processor is caused by the third determination instruction to determine a first cluster to which a web page request to be identified belongs, when the web page request to be identified is received.

The processor is caused by the identification instruction to determine the web page request to be identified as a malicious web page request, if a distance between a feature vector of the web page request to be identified and a center vector of the first cluster is not within a preset distance range corresponding to the first cluster.

In an example of the present disclosure, the machine executable instructions may further include a calculation instruction, a fourth determination instruction, a creation instruction, a fifth determination instruction, and a sixth determination instruction.

The processor is caused by the calculation instruction to calculate a distance between the center vector of the first cluster and a feature vector of each of sample web page requests included in the first cluster.

The processor is caused by the fourth determination instruction to determine a first average and a first variance of the calculated distances.

The processor is caused by the creation instruction to create a normal distribution for the first cluster according to the first average and the first variance.

The processor is caused by the fifth determination instruction to determine a first position and a second position, which satisfy a first preset condition, on the horizontal axis of a coordinate system in which the normal distribution for the first cluster is located, wherein the first preset condition includes: the first position and the second position are symmetric relative to an axis whose abscissa equals to the first average, and a probability that a distance corresponding to any sample web page request in the first cluster is between the first location and the second location is a first preset probability, and wherein the distance corresponding to any sample web page request in the first cluster is a distance between a feature vector of this sample web page request and the center vector of the first cluster.

The processor is caused by the sixth determination instruction to determine an interval defined by the first location and the second location as the preset distance range corresponding to the first cluster.

In an example of the present disclosure, the processor may be caused by the creation instruction to:

create a transitional normal distribution for the first cluster according to the first average and the first variance;

determine a third position and a fourth position, which satisfy a second preset condition, on the horizontal axis of a coordinate system in which the transitional normal distribution for the first cluster is located, wherein the second preset condition includes: the third position and the fourth position are symmetric relative to an axis whose abscissa equals to the first average, and a probability that a distance corresponding to any sample web page request in the first cluster is between the third location and the fourth location is a second preset probability;

remove a sample web page request in the first cluster that does not satisfy the following formula:

$$\delta_1 < x < \delta_2;$$

where x is a distance between a feature vector of a sample web page request included in the first cluster and the center vector of the first cluster, $\delta_1$ is the third position, and $\delta_2$ is the fourth position;

redetermine a center vector of the first cluster according to feature vectors of remaining sample web page requests included in the first cluster;

recalculate a distance between the redetermined center vector of the first cluster and a feature vector of each of the remaining sample web page requests included in the first cluster;

determine a second average and a second variance of the recalculated distances; and

create the normal distribution for the first cluster according to the second average and the second variance.

In an example of the present disclosure, the processor may be caused by the third determination instruction to:

extract features of the web page request to be identified when the web page request to be identified is received;

determine a feature vector of the web page request to be identified;

calculate a distance between the feature vector of the web page request to be identified and a center vector of each cluster; and

determine a cluster corresponding to the minimum distance in the calculated distances as the first cluster to which the web page request to be identified belongs.

In an example of the present disclosure, the processor may be caused by the extraction instruction to:

extract words of a preset type in the plurality of sample web page requests;

determine the number of occurrences of each word in the extracted words;

extract a structural feature of each of the plurality of sample web page requests; and

for each sample web page request, determine the number of occurrences of a word of the preset type in this sample web page request and the structural feature of this sample web page request as features of this sample web page request.

In an example of the present disclosure, the processor may be caused by the extraction instruction to: extract parameter names and parameter values in the plurality of sample web page requests.

In an example of the present disclosure, the processor may be caused by the extraction instruction to: for each sample web page request, extract the number of parameters, the average length of parameter values, and the maximum number of bytes of the parameter values in this sample web page request, and extract an average of the numbers of parameters and an average of lengths of parameter values in sample web page requests having the same path as this sample web page request.

In the technical solution provided by an example of the present disclosure, the sample web page requests are clustered, and a center vector of the feature vectors of the sample web page requests included in each cluster is determined. Most non-malicious web page requests have the same regular pattern. After the sample web page requests are clustered, the distribution of the non-malicious sample web page requests in one cluster is concentrated. The distance between the feature vector of a non-malicious sample web page request in the cluster and the center vector of the cluster is within a certain distance range, i.e., the preset distance range. Thus, by using the clusters of the sample web page requests as the web page request identification model, the first cluster to which the web page request to be identified belongs is determined, and whether the web page request to be identified is a malicious web page request can be determined accurately, according to whether the distance between the feature vector of the web page request to be identified and the center vector of the first cluster is within the preset distance range corresponding to the first cluster. In this way, there is no need to train the web page request identification model by a great amount of tag data, thereby effectively reducing the computation complexity and improving the speed of training the web page request identification model.

It should be noted that the relationship terms herein such as "first", "second" and the like are only used for distinguishing one entity or operation from another entity or operation, but do not necessarily require or imply that there is any actual relationship or order between these entities or operations. Moreover, the terms "include", "comprise" or any other variants thereof are intended to cover non-exclusive inclusions, so that processes, methods, articles or devices comprising a series of elements comprise not only those elements listed but also those not specifically listed or the elements intrinsic to these processes, methods, articles, or devices. Without further limitations, elements defined by the sentences "comprise(s) a..." or "include(s) a..." do not exclude that there are other identical elements in the processes, methods, articles, or devices which include these elements.

All of the examples in the description are described in a correlated manner, and identical or similar parts in various examples can refer to one another. In addition, the description for each example focuses on the differences from other examples. In particular, the examples of the apparatus for identifying a web page request, the electronic device, the machine readable storage medium and the machine executable instructions are described briefly, since they are substantially similar to the example of the method for identifying a web page request. The related contents can refer to the description of the example of the method for identifying a web page request.

**Claims**

1. A method for identifying a web page request, comprising:

extracting features of a plurality of sample web page requests (101);
determining a feature vector for features of each sample web page request (102);
clustering the plurality of sample web page requests using a preset clustering algorithm according to the determined feature vectors (103);
determining a center vector of feature vectors of sample web page requests included in each cluster according to the feature vectors of the sample web page requests included in this cluster (104);

determining a first cluster to which a web page request to be identified belongs, when the web page request to be identified is received (105); and

determining the web page request to be identified as a malicious web page request, if a distance between a feature vector of the web page request to be identified and a center vector of the first cluster is not within a preset distance range corresponding to the first cluster (106);

**characterized in that**, the preset distance range corresponding to the first cluster is determined by the following steps:

> calculating a distance between the center vector of the first cluster and a feature vector of each of sample web page requests included in the first cluster;
> determining a first average and a first variance of the calculated distances;
> creating a normal distribution for the first cluster according to the first average and the first variance;
> determining a first position and a second position, which satisfy a first preset condition, on the horizontal axis of a coordinate system in which the normal distribution for the first cluster is located, wherein the first preset condition comprises: the first position and the second position are symmetric relative to an axis whose abscissa equals to the first average, and a probability that a distance corresponding to any sample web page request in the first cluster is between the first location and the second location is a first preset probability, and wherein the distance corresponding to any sample web page request in the first cluster is a distance between a feature vector of this sample web page request and the center vector of the first cluster; and
> determining an interval defined by the first location and the second location as the preset distance range corresponding to non-malicious web page requests in the first cluster.

2. The method of claim 1, wherein creating a normal distribution for the first cluster according to the first average and the first variance, comprises:

> creating a transitional normal distribution for the first cluster according to the first average and the first variance;
> determining a third position and a fourth position, which satisfy a second preset condition, on the horizontal axis of a coordinate system in which the transitional normal distribution for the first cluster is located, wherein the second preset condition comprises: the third position and the fourth position are symmetric relative to an axis whose abscissa equals to the first average, and a probability that a distance corresponding to any sample web page request in the first cluster is between the third location and the fourth location is a second preset probability;
> removing a sample web page request in the first cluster that does not satisfy the following formula:

$$\delta_1 < x < \delta_2;$$

> where x is a distance between a feature vector of a sample web page request included in the first cluster and the center vector of the first cluster, $\delta_1$ is the third position, and $\delta_2$ is the fourth position;
> redetermining a center vector of the first cluster according to feature vectors of remaining sample web page requests included in the first cluster;
> recalculating a distance between the redetermined center vector of the first cluster and a feature vector of each of the remaining sample web page requests included in the first cluster;
> determining a second average and a second variance of the recalculated distances; and
> creating the normal distribution for the first cluster according to the second average and the second variance.

3. The method of claim 1 or 2, wherein determining a first cluster to which the web page request to be identified belongs, comprises:

> extracting features of the web page request to be identified;
> determining a feature vector of the web page request to be identified;
> calculating a distance between the feature vector of the web page request to be identified and a center vector of each cluster; and
> determining a cluster corresponding to the minimum distance in the calculated distances as the first cluster to which the web page request to be identified belongs.

4. The method of claim 1, wherein extracting features of a plurality of sample web page requests (101), comprises:

extracting words of a preset type in the plurality of sample web page requests (1011);
determining the number of occurrences of each word in the extracted words (1012);
extracting a structural feature of each of the plurality of sample web page requests (1013); and
for each sample web page request, determining the number of occurrences of a word of the preset type in this sample web page request and the structural feature of this sample web page request as features of this sample web page request (1014).

5. The method of claim 4, wherein extracting words of a preset type in the plurality of sample web page requests (1011), comprises:
extracting parameter names and parameter values in the plurality of sample web page requests.

6. The method of claim 4, wherein extracting a structural feature of each of the plurality of sample web page requests, comprises:
for each sample web page request, extracting the number of parameters, the average length of parameter values, and the maximum number of bytes of the parameter values in this sample web page request, and extracting an average of the numbers of parameters and an average of lengths of parameter values in sample web page requests having the same path as this sample web page request.

7. An electronic device, comprising a processor (601) and a machine readable storage medium (602), wherein the machine readable storage medium (602) stores machine executable instructions that are executable by the processor, and the machine executable instructions comprise an extraction instruction (612), a first determination instruction (622), a clustering instruction (632), a second determination instruction (642), a third determination instruction (652), and an identification instruction (662), wherein,

the processor (601) is caused by the extraction instruction (612) to extract features of a plurality of sample web page requests;
the processor (601) is caused by the first determination instruction (622) to determine a feature vector for features of each sample web page request;
the processor (601) is caused by the clustering instruction (632) to cluster the plurality of sample web page requests using a preset clustering algorithm according to the determined feature vectors;
the processor (601) is caused by the second determination instruction (642) to determine a center vector of feature vectors of sample web page requests included in each cluster according to the feature vectors of the sample web page requests included in this cluster;
the processor (601) is caused by the third determination instruction (652) to determine a first cluster to which a web page request to be identified belongs, when the web page request to be identified is received; and
the processor (601) is caused by the identification instruction (662) to determine the web page request to be identified as a malicious web page request, if a distance between a feature vector of the web page request to be identified and a center vector of the first cluster is not within a preset distance range corresponding to the first cluster;
**characterized in that** the machine executable instructions further comprise: a calculation instruction, a fourth determination instruction, a creation instruction, a fifth determination instruction, and a sixth determination instruction; the preset distance range corresponding to the first cluster is determined by the processor executing the calculation instruction, the fourth determination instruction, the creation instruction, the fifth determination instruction, and the sixth determination instruction;
the processor is caused by the calculation instruction to calculate a distance between the center vector of the first cluster and a feature vector of each of sample web page requests included in the first cluster;
the processor is caused by the fourth determination instruction to determine a first average and a first variance of the calculated distances;
the processor is caused by the creation instruction to create a normal distribution for the first cluster according to the first average and the first variance;
the processor is caused by the fifth determination instruction to determine a first position and a second position, which satisfy a first preset condition, on the horizontal axis of a coordinate system in which the normal distribution for the first cluster is located, wherein the first preset condition comprises: the first position and the second position are symmetric relative to an axis whose abscissa equals to the first average, and a probability that a distance corresponding to any sample web page request in the first cluster is between the first location and the second location is a first preset probability, and wherein the distance corresponding to any sample web page request in the first cluster is a distance between a feature vector of this sample web page request and the center vector of the first cluster; and

the processor is caused by the sixth determination instruction to determine an interval defined by the first location and the second location as the preset distance range corresponding to non-malicious web page requests in the first cluster.

8. The electronic device of claim 7, wherein the processor (601) is caused by the creation instruction to:

create a transitional normal distribution for the first cluster according to the first average and the first variance;
determine a third position and a fourth position, which satisfy a second preset condition, on the horizontal axis of a coordinate system in which the transitional normal distribution for the first cluster is located, wherein the second preset condition comprises: the third position and the fourth position are symmetric relative to an axis whose abscissa equals to the first average, and a probability that a distance corresponding to any sample web page request in the first cluster is between the third location and the fourth location is a second preset probability;
remove a sample web page request in the first cluster that does not satisfy the following formula:

$$\delta_1 < x < \delta_2;$$

where x is a distance between a feature vector of a sample web page request included in the first cluster and the center vector of the first cluster, $\delta_1$ is the third position, and $\delta_2$ is the fourth position;
redetermine a center vector of the first cluster according to feature vectors of remaining sample web page requests included in the first cluster;
recalculate a distance between the redetermined center vector of the first cluster and a feature vector of each of the remaining sample web page requests included in the first cluster;
determine a second average and a second variance of the recalculated distances; and
create the normal distribution for the first cluster according to the second average and the second variance.

9. The electronic device of claim 7 or 8, wherein the processor (601) is caused by the third determination instruction (652) to:

extract features of the web page request to be identified when the web page request to be identified is received;
determine a feature vector of the web page request to be identified;
calculate a distance between the feature vector of the web page request to be identified and a center vector of each cluster; and
determine a cluster corresponding to the minimum distance in the calculated distances as the first cluster to which the web page request to be identified belongs.

10. The electronic device of claim 7, wherein the processor (601) is caused by the extraction instruction (612) to:

extract words of a preset type in the plurality of sample web page requests;
determine the number of occurrences of each word in the extracted words;
extract a structural feature of each of the plurality of sample web page requests; and
for each sample web page request, determine the number of occurrences of a word of the preset type in this sample web page request and the structural feature of this sample web page request as features of this sample web page request.

11. The electronic device of claim 10, wherein the processor (601) is caused by the extraction instruction (612) to: extract parameter names and parameter values in the plurality of sample web page requests; or for each sample web page request, extract the number of parameters, the average length of parameter values, and the maximum number of bytes of the parameter values in this sample web page request, and extract an average of the numbers of parameters and an average of lengths of parameter values in sample web page requests having the same path as this sample web page request.

12. A machine readable storage medium storing machine executable instructions, which comprise a extraction instruction (612), a first determination instruction (622), a clustering instruction (632), a second determination instruction (642), a third determination instruction (652), an identification instruction (662), wherein

when being called and executed by the processor, the extraction instruction (612) causes the processor to extract features of a plurality of sample web page requests;

when being called and executed by the processor, the first determination instruction (622) causes the processor to determine a feature vector for features of each sample web page request;

when being called and executed by the processor, the clustering instruction (632) causes the processor to cluster the plurality of sample web page requests using a preset clustering algorithm according to the determined feature vectors;

when being called and executed by the processor, the second determination instruction (642) causes the processor to determine a center vector of feature vectors of sample web page requests included in each cluster according to the feature vectors of the sample web page requests included in this cluster;

when being called and executed by the processor, the third determination instruction (652) causes the processor to determine a first cluster to which a web page request to be identified belongs, when the web page request to be identified is received;

when being called and executed by the processor, the identification instruction (662) causes the processor to determine the web page request to be identified as a malicious web page request, if a distance between a feature vector of the web page request to be identified and a center vector of the first cluster is not within a preset distance range corresponding to the first cluster;

**characterized in that** the machine executable instructions further comprise: a calculation instruction, a fourth determination instruction, a creation instruction, a fifth determination instruction, and a sixth determination instruction; the preset distance range corresponding to the first cluster is determined by the processor executing the calculation instruction, the fourth determination instruction, the creation instruction, the fifth determination instruction, and the sixth determination instruction;

when being called and executed by the processor, the calculation instruction causes the processor to calculate a distance between the center vector of the first cluster and a feature vector of each of sample web page requests included in the first cluster;

when being called and executed by the processor, the fourth determination instruction causes the processor to determine a first average and a first variance of the calculated distances;

when being called and executed by the processor, the creation instruction causes the processor to create a normal distribution for the first cluster according to the first average and the first variance;

when being called and executed by the processor, the fifth determination instruction causes the processor to determine a first position and a second position, which satisfy a first preset condition, on the horizontal axis of a coordinate system in which the normal distribution for the first cluster is located, wherein the first preset condition includes: the first position and the second position are symmetric relative to an axis whose abscissa equals to the first average, and a probability that a distance corresponding to any sample web page request in the first cluster is between the first location and the second location is a first preset probability, and wherein the distance corresponding to any sample web page request in the first cluster is a distance between a feature vector of this sample web page request and the center vector of the first cluster; and

when being called and executed by the processor, the sixth determination instruction causes the processor to determine an interval defined by the first location and the second location as the preset distance range corresponding to non-malicious web page requests in the first cluster.

13. Machine executable instructions, which comprise a extraction instruction (612), a first determination instruction (622), a clustering instruction (632), a second determination instruction (642),, a third determination instruction (652), an identification instruction (662), wherein

the processor (601) is caused by the extraction instruction (612) to extract features of a plurality of sample web page requests;

the processor (601) is caused by the first determination instruction (622) to determine a feature vector for features of each sample web page request;

the processor (601) is caused by the clustering instruction (632) to cluster the plurality of sample web page requests using a preset clustering algorithm according to the determined feature vectors;

the processor (601) is caused by the second determination instruction (642) to determine a center vector of feature vectors of sample web page requests included in each cluster according to the feature vectors of the sample web page requests included in this cluster;

the processor (601) is caused by the third determination instruction (652) to determine a first cluster to which a web page request to be identified belongs, when the web page request to be identified is received;

the processor (601) is caused by the identification instruction (662) to determine the web page request to be identified as a malicious web page request, if a distance between a feature vector of the web page request to be identified and a center vector of the first cluster is not within a preset distance range corresponding to the first cluster;

**characterized in that** the machine executable instructions further comprise: a calculation instruction, a fourth determination instruction, a creation instruction, a fifth determination instruction, and a sixth determination instruction; the preset distance range corresponding to the first cluster is determined by the processor executing the calculation instruction, the fourth determination instruction, the creation instruction, the fifth determination instruction, and the sixth determination instruction;

the processor (601) is caused by the calculation instruction to calculate a distance between the center vector of the first cluster and a feature vector of each of sample web page requests included in the first cluster;

the processor (601) is caused by the fourth determination instruction to determine a first average and a first variance of the calculated distances;

the processor (601) is caused by the creation instruction to create a normal distribution for the first cluster according to the first average and the first variance;

the processor (601) is caused by the fifth determination instruction to determine a first position and a second position, which satisfy a first preset condition, on the horizontal axis of a coordinate system in which the normal distribution for the first cluster is located, wherein the first preset condition includes: the first position and the second position are symmetric relative to an axis whose abscissa equals to the first average, and a probability that a distance corresponding to any sample web page request in the first cluster is between the first location and the second location is a first preset probability, and wherein the distance corresponding to any sample web page request in the first cluster is a distance between a feature vector of this sample web page request and the center vector of the first cluster; and

the processor (601) is caused by the sixth determination instruction to determine an interval defined by the first location and the second location as the preset distance range corresponding to non-malicious web page requests in the first cluster.

**Patentansprüche**

1. Verfahren zum Identifizieren einer Webseitenanfrage, das die folgenden Schritte umfasst:

Extrahieren von Merkmalen einer Vielzahl von Beispiel-Webseitenanfragen (101);

Bestimmen eines Merkmalvektors für Merkmale jeder Beispiel-Webseitenanfrage (102);

Clustern der Vielzahl von Beispiel-Webseitenanfragen unter Verwendung eines voreingestellten Clustering-Algorithmus gemäß den bestimmten Merkmalsvektoren (103);

Bestimmen eines Mittelvektors von Merkmalsvektoren von Beispiel-Webseitenanfragen, die in jedem Cluster enthalten sind, gemäß den Merkmalsvektoren der Beispiel-Webseitenanfragen, die in diesem Cluster enthalten sind (104);

Bestimmen eines ersten Clusters, zu dem eine zu identifizierende Webseitenanfrage gehört, wenn die zu identifizierende Webseitenanfrage empfangen wird (105); und

Bestimmen der zu identifizierenden Webseitenanfrage als eine bösartige Webseitenanfrage, wenn ein Abstand zwischen einem Merkmalsvektor der zu identifizierenden Webseitenanfrage und einem Mittelvektor des ersten Clusters nicht innerhalb eines voreingestellten Abstandsbereichs liegt, der dem ersten Cluster zugeordnet ist (106);

**dadurch gekennzeichnet, dass** der voreingestellte Abstandsbereich, der dem ersten Cluster zugeordnet ist, durch die folgenden Schritte bestimmt wird:

Berechnen eines Abstands zwischen dem Mittelvektor des ersten Clusters und einem Merkmalsvektor jeder der in dem ersten Cluster enthaltenen Beispiel-Webseitenanfragen;

Bestimmen eines ersten Mittelwerts und einer ersten Varianz der berechneten Abstände;

Erzeugen einer Normalverteilung für den ersten Cluster gemäß dem ersten Mittelwert und der ersten Varianz;

Bestimmen einer ersten Position und einer zweiten Position, die eine erste voreingestellte Bedingung erfüllen, auf der horizontalen Achse eines Koordinatensystems, in dem die Normalverteilung für den ersten Cluster angeordnet ist, wobei die erste voreingestellte Bedingung das Folgende umfasst: die erste Position und die zweite Position sind symmetrisch relativ zu einer Achse, deren Abszisse gleich dem ersten Mittelwert ist, und eine Wahrscheinlichkeit, dass ein Abstand, der einer beliebigen Webseitenanfrage in dem ersten Cluster entspricht, zwischen der ersten Position und der zweiten Position liegt, ist eine erste voreingestellte Wahrscheinlichkeit, und wobei der Abstand, der einer beliebigen Webseitenanfrage in dem ersten Cluster entspricht, ein Abstand zwischen einem Merkmalsvektor dieser Webseitenanfrage und dem Mittelvektor des ersten Clusters ist; und

Bestimmen eines Intervalls, das durch die erste Position und die zweite Position definiert ist, als den voreingestellten Abstandsbereich, der nicht-bösartigen Webseitenanfragen in dem ersten Cluster entspricht.

2.  Verfahren nach Anspruch 1, wobei das Erzeugen einer Normalverteilung für den ersten Cluster gemäß dem ersten Mittelwert und der ersten Varianz die folgenden Schritte umfasst:

    Erzeugen einer Übergangsnormalverteilung für den ersten Cluster gemäß dem ersten Mittelwert und der ersten Varianz;
    Bestimmen einer dritten Position und einer vierten Position, die eine zweite voreingestellte Bedingung erfüllen, auf der horizontalen Achse eines Koordinatensystems, in dem die Übergangsnormalverteilung für den ersten Cluster angeordnet ist, wobei die zweite voreingestellte Bedingung das Folgende umfasst: die dritte Position und die vierte Position sind symmetrisch relativ zu einer Achse, deren Abszisse gleich dem ersten Mittelwert ist, und eine Wahrscheinlichkeit, dass ein Abstand, der einer beliebigen Beispiel-Webseitenanfrage in dem ersten Cluster entspricht, zwischen der dritten Position und der vierten Position liegt, ist eine zweite voreingestellte Wahrscheinlichkeit;
    Entfernen einer Beispiel-Webseitenanfrage in dem ersten Cluster, die die folgende Formel nicht erfüllt:

$$\delta_1 < x < \delta_2;$$

    wobei x ein Abstand zwischen einem Merkmalsvektor einer Beispiel-Webseitenanfrage, die in dem ersten Cluster enthalten ist, und dem Mittelvektor des ersten Clusters ist, $\delta_1$ die dritte Position ist, und $\delta_2$ die vierte Position ist;
    erneutes Bestimmen eines Mittelvektors des ersten Clusters gemäß den Merkmalsvektoren der verbleibenden Beispiel-Webseitenanfragen, die in dem ersten Cluster enthalten sind;
    erneutes Berechnen eines Abstands zwischen dem neu bestimmten Mittelvektor des ersten Clusters und einem Merkmalsvektor jeder der verbleibenden Beispiel-Webseitenanfragen, die in dem ersten Cluster enthalten sind;
    Bestimmen eines zweiten Mittelwerts und einer zweiten Varianz der neu berechneten Abstände; und
    Erzeugen der Normalverteilung für den ersten Cluster gemäß dem zweiten Mittelwert und der zweiten Varianz.

3.  Verfahren nach Anspruch 1 oder 2, wobei das Bestimmen eines ersten Clusters, zu dem eine zu identifizierende Webseitenanfrage gehört, umfasst:

    Extrahieren von Merkmalen der zu identifizierenden Webseitenanfrage;
    Bestimmen eines Merkmalsvektors der zu identifizierenden Webseitenanfrage;
    Berechnen eines Abstands zwischen dem Merkmalsvektor der zu identifizierenden Webseitenanfrage und einem Mittelvektor jedes Clusters; und
    Bestimmen eines Clusters, der dem minimalen Abstand in den berechneten Abständen entspricht, als den ersten Cluster, zu dem die zu identifizierende Webseitenanfrage gehört.

4.  Verfahren nach Anspruch 1, wobei das Extrahieren von Merkmalen einer Vielzahl von Beispiel-Webseitenanfragen (101) die folgenden Schritte umfasst:

    Extrahieren von Wörtern eines voreingestellten Typs in der Vielzahl von Beispiel-Webseitenanfragen (1011);
    Bestimmen der Anzahl des Auftretens jedes Wortes in den extrahierten Wörtern (1012);
    Extrahieren eines strukturellen Merkmals von jeder der Vielzahl von Beispiel-Webseitenanfragen (1013); und
    für jede Beispiel-Webseitenanfrage, Bestimmen der Anzahl des Auftretens eines Wortes des voreingestellten Typs in dieser Beispiel-Webseitenanfrage und des strukturellen Merkmals dieser Beispiel-Webseitenanfrage als Merkmale dieser Beispiel-Webseitenanfrage (1014).

5.  Verfahren nach Anspruch 4, wobei das Extrahieren von Wörtern eines voreingestellten Typs in der Vielzahl von Beispiel-Webseitenanfragen (1011) den folgenden Schritt umfasst:
    Extrahieren von Parameternamen und Parameterwerten in der Vielzahl von Beispiel-Webseitenanfragen.

6.  Verfahren nach Anspruch 4, wobei das Extrahieren eines strukturellen Merkmals von jeder der Vielzahl von Webseitenanfragen die folgenden Schritte umfasst:
    für jede Beispiel-Webseitenanfrage, Extrahieren der Anzahl von Parametern, der durchschnittlichen Länge von Parameterwerten und der maximalen Anzahl von Bytes der Parameterwerte in dieser Beispiel-Webseitenanfrage,

**EP 3 684 025 B1**

und Extrahieren eines Mittelwerts der Anzahl von Parametern und eines Mittelwerts der Längen von Parameterwerten in Beispiel-Webseitenanfragen, die denselben Pfad wie diese Beispiel-Webseitenanfrage haben.

7.  Elektronische Vorrichtung, die einen Prozessor (601) und ein maschinenlesbares Speichermedium (602) aufweist, wobei das maschinenlesbare Speichermedium (602) maschinenausführbare Anweisungen speichert, die durch den Prozessor ausführbar sind, und die maschinenausführbaren Anweisungen eine Extraktionsanweisung (612), eine erste Bestimmungsanweisung (622), eine Clustering-Anweisung (632), eine zweite Bestimmungsanweisung (642), eine dritte Bestimmungsanweisung (652) und eine Identifikationsanweisung (662) aufweisen, wobei

    der Prozessor (601) durch die Extraktionsanweisung (612) veranlasst wird zum Extrahieren von Merkmalen einer Vielzahl von Beispiel-Webseitenanfragen;
    der Prozessor (601) durch die erste Bestimmungsanweisung (622) veranlasst wird zum Bestimmen eines Merkmalsvektors für Merkmale jeder Beispiel-Webseitenanfrage;
    der Prozessor (601) durch die Clustering-Anweisung (632) veranlasst wird zum Clustern der Vielzahl von Muster-Webseitenanfragen unter Verwendung eines voreingestellten Clustering-Algorithmus gemäß den bestimmten Merkmalsvektoren;
    der Prozessor (601) durch die zweite Bestimmungsanweisung (642) veranlasst wird zum Bestimmen eines Mittelvektors von Merkmalsvektoren von Beispiel-Webseitenanfragen, die in jedem Cluster enthalten sind, gemäß den Merkmalsvektoren der Beispiel-Webseitenanfragen, die in diesem Cluster enthalten sind;
    der Prozessor (601) durch die dritte Bestimmungsanweisung (652) veranlasst wird zum Bestimmen eines ersten Clusters, zu dem eine zu identifizierende Webseitenanfrage gehört, wenn die zu identifizierende Webseitenanfrage empfangen wird; und
    der Prozessor (601) durch die Identifikationsanweisung (662) veranlasst wird zum Bestimmen der zu identifizierenden Webseitenanfrage als eine bösartige Webseitenanfrage, wenn ein Abstand zwischen einem Merkmalsvektor der zu identifizierenden Webseitenanfrage und einem Mittelvektor des ersten Clusters nicht innerhalb eines voreingestellten Abstandsbereichs liegt, der dem ersten Cluster zugeordnet ist;
    **dadurch gekennzeichnet, dass** die maschinenausführbaren Anweisungen das Folgende aufweisen: eine Berechnungsanweisung, eine vierte Bestimmungsanweisung, eine Erzeugungsanweisung, eine fünfte Bestimmungsanweisung und eine sechste Bestimmungsanweisung; der voreingestellte Abstandsbereich, der dem ersten Cluster zugeordnet ist, durch den Prozessor bestimmt wird, der die Berechnungsanweisung, die vierte Bestimmungsanweisung, die Erzeugungsanweisung, die fünfte Bestimmungsanweisung und die sechste Bestimmungsanweisung ausführt;
    der Prozessor durch die Berechnungsanweisung veranlasst wird zum Berechnen eines Abstands zwischen dem Mittelvektor des ersten Clusters und einem Merkmalsvektor jeder der in dem ersten Cluster enthaltenen Beispiel-Webseitenanfragen;
    der Prozessor durch die vierte Bestimmungsanweisung veranlasst wird zum eines ersten Mittelwerts und einer ersten Varianz der berechneten Abstände;
    der Prozessor durch die Erzeugungsanweisung veranlasst wird zum Erzeugen einer Normalverteilung für den ersten Cluster gemäß dem ersten Mittelwert und der ersten Varianz;
    der Prozessor durch die fünfte Bestimmungsanweisung veranlasst wird zum Bestimmen einer ersten Position und einer zweiten Position, die eine erste voreingestellte Bedingung erfüllen, auf der horizontalen Achse eines Koordinatensystems, in dem die Normalverteilung für den ersten Cluster angeordnet ist, wobei die erste voreingestellte Bedingung umfasst: die erste Position und die zweite Position sind symmetrisch relativ zu einer Achse, deren Abszisse gleich dem ersten Mittelwert ist, und eine Wahrscheinlichkeit, dass ein Abstand, der einer beliebigen Webseitenanfrage in dem ersten Cluster entspricht, zwischen der ersten Position und der zweiten Position liegt, ist eine erste voreingestellte Wahrscheinlichkeit; und wobei der Abstand, der einer beliebigen Webseitenanfrage in dem ersten Cluster entspricht, ein Abstand zwischen einem Merkmalsvektor dieser Webseitenanfrage und dem Mittelvektor des ersten Clusters ist; und
    der Prozessor durch die sechste Bestimmungsanweisung veranlasst wird zum Bestimmen eines Intervalls, das durch die erste Position und die zweite Position definiert ist, als den voreingestellten Abstandsbereich, der nicht-bösartigen Webseitenanfragen in dem ersten Cluster entspricht.

8.  Elektronische Vorrichtung nach Anspruch 7, wobei der Prozessor (601) durch die Erzeugungsanweisung veranlasst wird zum:

    Erzeugen einer Übergangsnormalverteilung für den ersten Cluster gemäß dem ersten Mittelwert und der ersten Varianz;
    Bestimmen einer dritten Position und einer vierten Position, die eine zweite voreingestellte Bedingung erfüllen, auf der horizontalen Achse eines Koordinatensystems, in dem die Übergangsnormalverteilung für den ersten Cluster angeordnet ist, wobei die zweite voreingestellte Bedingung umfasst: die dritte Position und die vierte Position sind symmetrisch relativ zu einer Achse, deren Abszisse gleich dem ersten Mittelwert ist, und eine Wahrscheinlichkeit, dass ein Abstand, der einer beliebigen Beispiel-Webseitenanfrage in dem ersten Cluster entspricht, zwischen der dritten Position und der vierten Position liegt, ist eine zweite voreingestellte Wahrscheinlichkeit;

Entfernen einer Beispiel-Webseitenanfrage in dem ersten Cluster, die die folgende Formel nicht erfüllt:

$$\delta_1 < x < \delta_2$$

wobei x ein Abstand zwischen einem Merkmalsvektor einer Beispiel-Webseitenanfrage, die in dem ersten Cluster enthalten ist, und dem Mittelvektor des ersten Clusters ist, $\delta_1$ die dritte Position ist, und $\delta_2$ die vierte Position ist;

erneutes Bestimmen eines Mittelvektors des ersten Cluster gemäß den Merkmalsvektoren der verbleibenden Beispiel-Webseitenanfragen, die in dem ersten Cluster enthalten sind;

erneutes Berechnen eines Abstands zwischen dem neu bestimmten Mittelvektor des ersten Clusters und einem Merkmalsvektor jeder der verbleibenden Beispiel-Webseitenanfragen, die in dem ersten Cluster enthalten sind;

Bestimmen eines zweiten Mittelwerts und einer zweiten Varianz der neu berechneten Abstände; und

Erzeugen der Normalverteilung für den ersten Cluster gemäß dem zweiten Mittelwert und der zweiten Varianz.

9. Elektronische Vorrichtung nach Anspruch 7 oder 8, wobei der Prozessor (601) durch die dritte Bestimmungsanweisung (652) veranlasst wird zum:

Extrahieren von Merkmalen der zu identifizierenden Webseitenanfrage, wenn die zu identifizierende Webseitenanfrage empfangen wird;

Bestimmen eines Merkmalsvektors der zu identifizierenden Webseitenanfrage;

Berechnen eines Abstands zwischen dem Merkmalsvektor der zu identifizierenden Webseitenanfrage und einem Mittelvektor jedes Clusters; und

Bestimmen eines Clusters, der dem minimalen Abstand in den berechneten Abständen entspricht, als den ersten Cluster, zu dem die zu identifizierende Webseitenanfrage gehört.

10. Elektronische Vorrichtung nach Anspruch 7, wobei der Prozessor (601) durch die Extraktionsanweisung (612) veranlasst wird zum:

Extrahieren von Wörtern eines voreingestellten Typs in der Vielzahl von Beispiel-Webseitenanfragen;

Bestimmen der Anzahl des Auftretens jedes Wortes in den extrahierten Wörtern;

Extrahieren eines strukturellen Merkmals von jeder der Vielzahl von Beispiel-Webseitenanfragen; und

für jede Beispiel-Webseitenanfrage, Bestimmen der Anzahl des Auftretens eines Wortes des voreingestellten Typs in dieser Beispiel-Webseitenanfrage und des strukturellen Merkmals dieser Beispiel-Webseitenanfrage als Merkmale dieser Beispiel-Webseitenanfrage.

11. Elektronische Vorrichtung nach Anspruch 10, wobei der Prozessor (601) durch die Extraktionsanweisung (612) veranlasst wird zum: Extrahieren von Parameternamen und Parameterwerten in der Vielzahl von Beispiel-Webseitenanfragen; oder für jede Beispiel-Webseitenanfrage, Extrahieren der Anzahl von Parametern, der durchschnittlichen Länge von Parameterwerten und der maximalen Anzahl von Bytes der Parameterwerte in dieser Beispiel-Webseitenanfrage, und Extrahieren eines Mittelwerts der Anzahl von Parametern und eines Mittelwerts der Längen von Parameterwerten in Beispiel-Webseitenanfragen mit demselben Pfad wie diese Beispiel-Webseitenanfrage.

12. Maschinenlesbares Speichermedium, das maschinenausführbare Anweisungen speichert, die eine Extraktionsanweisung (612), eine erste Bestimmungsanweisung (622), eine Clustering-Anweisung (632), eine zweite Bestimmungsanweisung (642), eine dritte Bestimmungsanweisung (652) und eine Identifikationsanweisung (662) aufweisen, wobei

wenn sie von dem Prozessor aufgerufen und ausgeführt wird, die Extraktionsanweisung (612) den Prozessor veranlasst zum Extrahieren von Merkmalen einer Vielzahl von Beispiel-Webseitenanfragen;

wenn sie von dem Prozessor aufgerufen und ausgeführt wird, die erste Bestimmungsanweisung (622) den Prozessor veranlasst zum Bestimmen eines Merkmalsvektors für Merkmale jeder Beispiel-Webseitenanfrage;

wenn sie von dem Prozessor aufgerufen und ausgeführt wird, die Clustering-Anweisung (632) den Prozessor veranlasst zum Clustern der Vielzahl von Beispiel-Webseitenanfragen unter Verwendung eines voreingestellten Clustering-Algorithmus gemäß den bestimmten Merkmalsvektoren;

wenn sie von dem Prozessor aufgerufen und ausgeführt wird, die zweite Bestimmungsanweisung (642) den Prozessor veranlasst zum Bestimmen eines Mittelvektors von Merkmalsvektoren von Beispiel-Webseitenanfragen, die in jedem Cluster enthalten sind, gemäß den Merkmalsvektoren der Beispiel-Webseitenanfragen, die in diesem Cluster enthalten sind;

wenn sie von dem Prozessor aufgerufen und ausgeführt wird, die dritte Bestimmungsanweisung (652) den Prozessor veranlasst zum Bestimmen eines ersten Clusters, zu dem eine zu identifizierende Webseitenanfrage gehört, wenn die zu identifizierende Webseitenanfrage empfangen wird;

wenn sie von dem Prozessor aufgerufen und ausgeführt wird, die Identifikationsanweisung (662) den Prozessor veranlasst zum Bestimmen der zu identifizierenden Webseitenanfrage als eine bösartige Webseitenanfrage, wenn ein Abstand zwischen einem Merkmalsvektor der zu identifizierenden Webseitenanfrage und einem Mittelvektor des ersten Clusters nicht innerhalb eines voreingestellten Abstandsbereichs liegt, der dem ersten Cluster zugeordnet ist;

**dadurch gekennzeichnet, dass** die maschinenausführbaren Anweisungen ferner aufweisen: eine Berechnungsanweisung, eine vierte Bestimmungsanweisung, eine Erzeugungsanweisung, eine fünfte Bestimmungsanweisung und eine sechste Bestimmungsanweisung; der voreingestellte Abstandsbereich, der dem ersten Cluster zugeordnet ist, durch den Prozessor bestimmt wird, der die Berechnungsanweisung, die vierte Bestimmungsanweisung, die Erzeugungsanweisung, die fünfte Bestimmungsanweisung und die sechste Bestimmungsanweisung ausführt;

wenn sie von dem Prozessor aufgerufen und ausgeführt wird, die Berechnungsanweisung den Prozessor veranlasst zum Berechnen eines Abstands zwischen dem Mittelvektor des ersten Clusters und einem Merkmalsvektor jeder der in dem ersten Cluster enthaltenen Beispiel-Webseitenanfragen;

wenn sie von dem Prozessor aufgerufen und ausgeführt wird, die vierte Bestimmungsanweisung den Prozessor veranlasst zum Bestimmen eines Mittelwerts und einer Varianz der berechneten Abstände;

wenn sie von dem Prozessor aufgerufen und ausgeführt wird, die Erzeugungsanweisung den Prozessor veranlasst zum Erzeugen einer Normalverteilung für den ersten Cluster gemäß dem ersten Mittelwert und der ersten Varianz;

wenn sie von dem Prozessor aufgerufen und ausgeführt wird, die fünfte Bestimmungsanweisung den Prozessor veranlasst zum Bestimmen einer ersten Position und einer zweiten Position, die eine voreingestellte Bedingung erfüllen, auf der horizontalen Achse eines Koordinatensystems, in dem die Normalverteilung für den ersten Cluster angeordnet ist, wobei die erste voreingestellte Bedingung umfasst: die erste Position und die zweite Position sind symmetrisch relativ zu einer Achse, deren Abszisse gleich dem ersten Mittelwert ist, und eine Wahrscheinlichkeit, dass ein Abstand, der einer beliebigen Webseitenanfrage in dem ersten Cluster entspricht, zwischen der ersten Position und der zweiten Position liegt, ist eine erste voreingestellte Wahrscheinlichkeit, und wobei der Abstand, der einer beliebigen Webseitenanfrage in dem ersten Cluster entspricht, ein Abstand zwischen einem Merkmalsvektor dieser Webseitenanfrage und dem Mittelvektor des ersten Cluster ist; und

wenn sie von dem Prozessor aufgerufen und ausgeführt wird, die sechste Bestimmungsanweisung den Prozessor veranlasst zum Bestimmen eines Intervalls, das durch die erste Position und die zweite Position definiert ist, als den voreingestellten Abstandsbereich, der nicht-bösartigen Webseitenanfragen in dem ersten Cluster entspricht.

13. Maschinenausführbare Anweisungen, die eine Extraktionsanweisung (612), eine erste Bestimmungsanweisung (622), eine Clustering-Anweisung (632), eine zweite Bestimmungsanweisung (642), eine dritte Bestimmungsanweisung (652) und eine Identifikationsanweisung (662) aufweisen, wobei

der Prozessor (601) durch die Extraktionsanweisung (612) veranlasst wird zum Extrahieren von Merkmalen einer Vielzahl von Beispiel-Webseitenanfragen;

der Prozessor (601) durch die erste Bestimmungsanweisung (622) veranlasst wird zum Bestimmen eines Merkmalvektors für Merkmale jeder Beispiel-Webseitenanfrage;

der Prozessor (601) durch die Clustering-Anweisung (632) veranlasst wird zum Clustern der Vielzahl von Beispiel-Webseitenanfragen unter Verwendung eines voreingestellten Clustering-Algorithmus gemäß den bestimmten Merkmalsvektoren;

der Prozessor (601) durch die zweite Bestimmungsanweisung (642) veranlasst wird zum Bestimmen eines Mittelvektors von Merkmalsvektoren von Beispiel-Webseitenanfragen, die in jedem Cluster enthalten sind, gemäß den Merkmalsvektoren der Beispiel-Webseitenanfragen, die in diesem Cluster enthalten sind;

der Prozessor (601) durch die dritte Bestimmungsanweisung (652) veranlasst wird zum Bestimmen eines ersten Clusters, zu dem eine zu identifizierende Webseitenanfrage gehört, wenn die zu identifizierende Webseitenanfrage empfangen wird;

der Prozessor (601) durch die Identifikationsanweisung (662) veranlasst wird zum Bestimmen der zu identifizierenden als eine bösartige Webseitenanfrage, wenn ein Abstand zwischen einem Merkmalsvektor der zu identifizierenden Webseitenanfrage und einem Mittelvektor des ersten Clusters nicht innerhalb eines voreingestellten Abstandsbereichs liegt, der dem ersten Cluster zugeordnet ist;

**dadurch gekennzeichnet, dass** die maschinenausführbaren Anweisungen ferner aufweisen: eine Berechnungsanweisung, eine vierte Bestimmungsanweisung, eine Erzeugungsanweisung, eine fünfte Bestimmungsanweisung und eine sechste Bestimmungsanweisung; der voreingestellte Abstandsbereich, der dem ersten Cluster zugeordnet ist, durch den Prozessor bestimmt wird, der die Berechnungsanweisung, die vierte Bestimmungsanweisung, die Erzeugungsanweisung, die fünfte Bestimmungsanweisung und die sechste Bestimmungsanweisung ausführt;

der Prozessor (601) durch die Berechnungsanweisung veranlasst wird zum Berechnen eines Abstands zwischen dem Mittelvektor des ersten Clusters und einem Merkmalsvektor jeder der in dem ersten Cluster enthaltenen Beispiel-Webseitenanfragen;

der Prozessor (601) durch die vierte Bestimmungsanweisung veranlasst wird zum Bestimmen eines ersten Mittelwerts und einer ersten Varianz der berechneten Abstände;

der Prozessor (601) durch die Erzeugungsanweisung veranlasst wird zum Erzeugen einer Normalverteilung für den ersten Cluster gemäß dem ersten Mittelwert und der ersten Varianz;

der Prozessor (601) durch die fünfte Bestimmungsanweisung veranlasst wird zum Bestimmen einer ersten Position und einer zweiten Position, die eine erste voreingestellte Bedingung erfüllen, auf der horizontalen Achse eines Koordinatensystems, in dem die Normalverteilung für den ersten Cluster angeordnet ist, wobei die erste voreingestellte Bedingung umfasst: die erste Position und die zweite Position sind symmetrisch relativ zu einer Achse, deren Abszisse gleich dem ersten Mittelwert ist, und eine Wahrscheinlichkeit, dass ein Abstand, der einer beliebigen Webseitenanfrage in dem Cluster entspricht, zwischen der ersten Position und der zweiten Position liegt, ist eine erste voreingestellte Wahrscheinlichkeit, und wobei der Abstand, der einer beliebigen Webseitenanfrage in dem ersten Cluster entspricht, ein Abstand zwischen einem Merkmalsvektor dieser Webseitenanfrage und dem Mittelvektor des ersten Clusters ist; und

der Prozessor (601) durch die sechste Bestimmungsanweisung veranlasst wird zum Bestimmen eines Intervalls, das durch die erste Position und die zweite Position definiert ist, als den voreingestellten Abstandsbereich, der nicht-bösartigen Webseitenanfragen in dem ersten Cluster entspricht.

## Revendications

1. Procédé d'identification d'une demande de page Web, comprenant les étapes consistant à :

   extraire des caractéristiques d'une pluralité d'exemples de demandes de page Web (101) ;
   déterminer un vecteur de caractéristiques pour des caractéristiques de chaque exemple de demande de page Web (102) ;
   mettre en grappe la pluralité d'exemples de demandes de page Web en utilisant un algorithme de mise en grappe prédéfini en fonction des vecteurs de caractéristiques déterminés (103) ;
   déterminer un vecteur central des vecteurs de caractéristiques d'exemples de demandes de page Web compris dans chaque grappe en fonction des vecteurs de caractéristiques des exemples de demandes de page Web compris dans cette grappe (104) ;
   déterminer une première grappe à laquelle une demande de page Web devant être identifiée appartient, quand la demande de page Web devant être identifiée est reçue (105) ; et
   déterminer la demande de page Web devant être identifiée comme étant une demande de page Web malveillante, si une distance entre un vecteur de caractéristiques de la demande de page Web devant être identifiée et un vecteur central de la première grappe ne se trouve pas dans les limites d'une plage de distance prédéfinie correspondant à la première grappe (106) ;
   **caractérisé en ce que**, la plage de distance prédéfinie correspondant à la première grappe est déterminée par les étapes suivantes consistant à :

   calculer une distance entre le vecteur central de la première grappe et un vecteur de caractéristiques de chacun des exemples de demandes de page Web compris dans la première grappe ;
   déterminer une première moyenne et une première variance des distances calculées ;
   créer une distribution normale pour la première grappe en fonction de la première moyenne et de la première variance ;

déterminer une première position et une deuxième position, qui satisfont à une première condition prédéfinie, sur l'axe horizontal d'un système de coordonnées dans lequel se trouve la distribution normale pour la première grappe, dans lequel la première condition prédéfinie comprend : la première position et la deuxième position sont symétriques par rapport à un axe dont l'abscisse est égale à la première moyenne, et une probabilité comme quoi une distance qui correspond à un exemple quelconque de demande de page Web dans la première grappe se trouve entre le premier emplacement et le deuxième emplacement est une première probabilité prédéfinie, et dans lequel la distance qui correspond à un exemple quelconque de demande de page Web dans la première grappe est une distance entre un vecteur de caractéristiques de cet exemple de demande de page Web et le vecteur central de la première grappe ; et

déterminer un intervalle défini par le premier emplacement et par le deuxième emplacement comme étant la plage de distance prédéfinie correspondant à des demandes de page Web non malveillantes dans la première grappe.

2. Procédé selon la revendication 1, dans lequel l'étape consistant à créer une distribution normale pour la première grappe en fonction de la première moyenne et de la première variance comprend les étapes consistant à :

créer une distribution normale de transition pour la première grappe en fonction de la première moyenne et de la première variance ;

déterminer une troisième position et une quatrième position, qui satisfont à une deuxième condition prédéfinie, sur l'axe horizontal d'un système de coordonnées dans lequel se trouve la distribution normale de transition pour la première grappe, dans lequel la deuxième condition prédéfinie comprend : la troisième position et la quatrième position sont symétriques par rapport à un axe dont l'abscisse est égale à la première moyenne, et une probabilité comme quoi une distance qui correspond à un exemple quelconque de demande de page Web dans la première grappe se trouve entre le troisième emplacement et le quatrième emplacement est une deuxième probabilité prédéfinie ;

retirer un exemple de demande de page Web dans la première grappe qui ne satisfait pas à la formule suivante :

$$\delta_1 < x < \delta_2 \; ;$$

où x est une distance entre un vecteur de caractéristiques d'un exemple de demande de page Web compris dans la première grappe et le vecteur central de la première grappe, $\delta_1$ est la troisième position, et $\delta_2$ est la quatrième position ;

redéterminer un vecteur central de la première grappe en fonction de vecteurs de caractéristiques d'exemples restants de demandes de page Web compris dans la première grappe ;

recalculer une distance entre le vecteur central redéterminé de la première grappe et un vecteur de caractéristiques de chacun des exemples restants de demandes de page Web compris dans la première grappe ;

déterminer une deuxième moyenne et une deuxième variance des distances recalculées ; et

créer la distribution normale pour la première grappe en fonction de la deuxième moyenne et de la deuxième variance.

3. Procédé selon la revendication 1 ou 2, dans lequel l'étape consistant à déterminer une première grappe à laquelle la demande de page Web devant être identifiée appartient comprend les étapes consistant à :

extraire des caractéristiques de la demande de page Web devant être identifiée ;

déterminer un vecteur de caractéristiques de la demande de page Web devant être identifiée ;

calculer une distance entre le vecteur de caractéristiques de la demande de page Web devant être identifiée et un vecteur central de chaque grappe ; et

déterminer une grappe correspondant à la distance minimum dans les distances calculées comme étant la première grappe à laquelle la demande de page Web devant être identifiée appartient.

4. Procédé selon la revendication 1, dans lequel l'étape consistant à extraire des caractéristiques d'une pluralité d'exemples de demandes de page Web (101) comprend les étapes consistant à :

extraire des mots d'un type prédéfini dans la pluralité d'exemples de demandes de page Web (1011) ;

déterminer le nombre d'occurrences de chaque mot dans les mots extraits (1012) ;

extraire une caractéristique structurelle de chacun de la pluralité d'exemples de demandes de page Web (1013) ;

et

pour chaque exemple de demande de page Web, déterminer le nombre d'occurrences d'un mot du type prédéfini dans cet exemple de demande de page Web et la caractéristique structurelle de cet exemple de demande de page Web comme étant des caractéristiques de cet exemple de demande de page Web (1014).

5.  Procédé selon la revendication 4, dans lequel l'étape consistant à extraire des mots d'un type prédéfini dans la pluralité d'exemples de demandes de page Web (1011) comprend l'étape consistant à :
    extraire des noms de paramètre et des valeurs de paramètre dans la pluralité d'exemples de demandes de page Web.

6.  Procédé selon la revendication 4, dans lequel l'étape consistant à extraire une caractéristique structurelle de chacun de la pluralité d'exemples de demandes de page Web comprend les étapes consistant à :
    pour chaque exemple de demande de page Web, extraire le nombre de paramètres, la longueur moyenne de valeurs de paramètre, et le nombre maximum d'octets des valeurs de paramètre dans cet exemple de demande de page Web, et extraire une moyenne des nombres de paramètres et une moyenne de longueurs de valeurs de paramètre dans des exemples de demandes de page Web ayant le même chemin que cet exemple de demande de page Web.

7.  Dispositif électronique, comprenant un processeur (601) et un support de stockage lisible par machine (602), dans lequel le support de stockage lisible par machine (602) stocke des instructions en mesure d'être exécutées par machine qui sont en mesure d'être exécutées par le processeur, et les instructions en mesure d'être exécutées par machine comprennent une instruction d'extraction (612), une première instruction de détermination (622), une instruction de mise en grappe (632), une deuxième instruction de détermination (642), une troisième instruction de détermination (652), et une instruction d'identification (662), dans lequel,

    le processeur (601) est amené par l'instruction d'extraction (612) à extraire des caractéristiques d'une pluralité d'exemples de demandes de page Web ;

    le processeur (601) est amené par la première instruction de détermination (622) à déterminer un vecteur de caractéristiques pour des caractéristiques de chaque exemple de demande de page Web ;

    le processeur (601) est amené par l'instruction de mise en grappe (632) à mettre en grappe la pluralité d'exemples de demandes de page Web en utilisant un algorithme de mise en grappe prédéfini en fonction des vecteurs de caractéristiques déterminés ;

    le processeur (601) est amené par la deuxième instruction de détermination (642) à déterminer un vecteur central des vecteurs de caractéristiques d'exemples de demandes de page Web compris dans chaque grappe en fonction des vecteurs de caractéristiques des exemples de demandes de page Web compris dans cette grappe ;

    le processeur (601) est amené par la troisième instruction de détermination (652) à déterminer une première grappe à laquelle une demande de page Web devant être identifiée appartient, quand la demande de page Web devant être identifiée est reçue ; et

    le processeur (601) est amené par l'instruction d'identification (662) à déterminer la demande de page Web devant être identifiée comme étant une demande de page Web malveillante, si une distance entre un vecteur de caractéristiques de la demande de page Web devant être identifiée et un vecteur central de la première grappe ne se trouve pas dans les limites d'une plage de distance prédéfinie correspondant à la première grappe ;

    **caractérisé en ce que** les instructions en mesure d'être exécutées par machine comprennent par ailleurs : une instruction de calcul, une quatrième instruction de détermination, une instruction de création, une cinquième instruction de détermination, et une sixième instruction de détermination ; la plage de distance prédéfinie correspondant à la première grappe est déterminée par le processeur qui exécute l'instruction de calcul, la quatrième instruction de détermination, l'instruction de création, la cinquième instruction de détermination, et la sixième instruction de détermination ;

    le processeur est amené par l'instruction de calcul à calculer une distance entre le vecteur central de la première grappe et un vecteur de caractéristiques de chacun des exemples de demandes de page Web compris dans la première grappe ;

    le processeur est amené par la quatrième instruction de détermination à déterminer une première moyenne et une première variance des distances calculées ;

    le processeur est amené par l'instruction de création à créer une distribution normale pour la première grappe en fonction de la première moyenne et de la première variance ;

    le processeur est amené par la cinquième instruction de détermination à déterminer une première position et une deuxième position, qui satisfont à une première condition prédéfinie, sur l'axe horizontal d'un système de coordonnées dans lequel se trouve la distribution normale pour la première grappe, dans lequel la première condition prédéfinie comprend : la première position et la deuxième position sont symétriques par rapport à un axe dont l'abscisse est égale à la première moyenne, et une probabilité comme quoi une distance qui correspond à un exemple quelconque de demande de page Web dans la première grappe se trouve entre le premier emplacement et le deuxième emplacement est une première probabilité prédéfinie, et dans lequel la distance qui correspond à un exemple quelconque de demande de page Web dans la première grappe est une distance entre un vecteur de caractéristiques de cet exemple de demande de page Web et le vecteur central de la première grappe ; et

le processeur est amené par la sixième instruction de détermination à déterminer un intervalle défini par le premier emplacement et par le deuxième emplacement comme étant la plage de distance prédéfinie correspondant à des demandes de page Web non malveillantes dans la première grappe.

8. Dispositif électronique selon la revendication 7, dans lequel le processeur (601) est amené par l'instruction de création à :

créer une distribution normale de transition pour la première grappe en fonction de la première moyenne et de la première variance ;

déterminer une troisième position et une quatrième position, qui satisfont à une deuxième condition prédéfinie, sur l'axe horizontal d'un système de coordonnées dans lequel se trouve la distribution normale de transition pour la première grappe, dans lequel la deuxième condition prédéfinie comprend : la troisième position et la quatrième position sont symétriques par rapport à un axe dont l'abscisse est égale à la première moyenne, et une probabilité comme quoi une distance qui correspond à un exemple quelconque de demande de page Web dans la première grappe se trouve entre le troisième emplacement et le quatrième emplacement est une deuxième probabilité prédéfinie ;

retirer un exemple de demande de page Web dans la première grappe qui ne satisfait pas à la formule suivante :

$$\delta_1 < x < \delta_2 \ ;$$

où x est une distance entre un vecteur de caractéristiques d'un exemple de demande de page Web compris dans la première grappe et le vecteur central de la première grappe, $\delta_1$ est la troisième position, et $\delta_2$ est la quatrième position ;

redéterminer un vecteur central de la première grappe en fonction de vecteurs de caractéristiques d'exemples restants de demandes de page Web compris dans la première grappe ;

recalculer une distance entre le vecteur central redéterminé de la première grappe et un vecteur de caractéristiques de chacun des exemples restants de demandes de page Web compris dans la première grappe ;

déterminer une deuxième moyenne et une deuxième variance des distances recalculées ; et

créer la distribution normale pour la première grappe en fonction de la deuxième moyenne et de la deuxième variance.

9. Dispositif électronique selon la revendication 7 ou 8, dans lequel le processeur (601) est amené par la troisième instruction de détermination (652) à :

extraire des caractéristiques de la demande de page Web devant être identifiée quand la demande de page Web devant être identifiée est reçue ;

déterminer un vecteur de caractéristiques de la demande de page Web devant être identifiée ;

calculer une distance entre le vecteur de caractéristiques de la demande de page Web devant être identifiée et un vecteur central de chaque grappe ; et

déterminer une grappe correspondant à la distance minimum dans les distances calculées comme étant la première grappe à laquelle la demande de page Web devant être identifiée appartient.

10. Dispositif électronique selon la revendication 7, dans lequel le processeur (601) est amené par l'instruction d'extraction (612) à :

extraire des mots d'un type prédéfini dans la pluralité d'exemples de demandes de page Web ;

déterminer le nombre d'occurrences de chaque mot dans les mots extraits ;

extraire une caractéristique structurelle de chacun de la pluralité d'exemples de demandes de page Web ; et pour chaque exemple de demande de page Web, déterminer le nombre d'occurrences d'un mot du type prédéfini dans cet exemple de demande de page Web et la caractéristique structurelle de cet exemple de demande de page Web comme étant des caractéristiques de cet exemple de demande de page Web.

**11.** Dispositif électronique selon la revendication 10, dans lequel le processeur (601) est amené par l'instruction d'extraction (612) à : extraire des noms de paramètre et des valeurs de paramètre dans la pluralité d'exemples de demandes de page Web ; ou pour chaque exemple de demande de page Web, extraire le nombre de paramètres, la longueur moyenne de valeurs de paramètre, et le nombre maximum d'octets des valeurs de paramètre dans cet exemple de demande de page Web, et extraire une moyenne des nombres de paramètres et une moyenne de longueurs de valeurs de paramètre dans des exemples de demandes de page Web ayant le même chemin que cet exemple de demande de page Web.

**12.** Support de stockage lisible par machine stockant des instructions en mesure d'être exécutées par machine, qui comprennent une instruction d'extraction (612), une première instruction de détermination (622), une instruction de mise en grappe (632), une deuxième instruction de détermination (642), une troisième instruction de détermination (652), une instruction d'identification (662), dans lequel

quand elle est appelée et exécutée par le processeur, l'instruction d'extraction (612) amène le processeur à extraire des caractéristiques d'une pluralité d'exemples de demandes de page Web ;
quand elle est appelée et exécutée par le processeur, la première instruction de détermination (622) amène le processeur à déterminer un vecteur de caractéristiques pour des caractéristiques de chaque exemple de demande de page Web ;
quand elle est appelée et exécutée par le processeur, l'instruction de mise en grappe (632) amène le processeur à mettre en grappe la pluralité d'exemples de demandes de page Web en utilisant un algorithme de mise en grappe prédéfini en fonction des vecteurs de caractéristiques déterminés ;
quand elle est appelée et exécutée par le processeur, la deuxième instruction de détermination (642) amène le processeur à déterminer un vecteur central des vecteurs de caractéristiques d'exemples de demandes de page Web compris dans chaque grappe en fonction des vecteurs de caractéristiques des exemples de demandes de page Web compris dans cette grappe ;
quand elle est appelée et exécutée par le processeur, la troisième instruction de détermination (652) amène le processeur à déterminer une première grappe à laquelle une demande de page Web devant être identifiée appartient, quand la demande de page Web devant être identifiée est reçue ;
quand elle est appelée et exécutée par le processeur, l'instruction d'identification (662) amène le processeur à déterminer la demande de page Web devant être identifiée comme étant une demande de page Web malveillante, si une distance entre un vecteur de caractéristiques de la demande de page Web devant être identifiée et un vecteur central de la première grappe ne se trouve pas dans les limites d'une plage de distance prédéfinie correspondant à la première grappe ;
**caractérisé en ce que** les instructions en mesure d'être exécutées par machine comprennent par ailleurs : une instruction de calcul, une quatrième instruction de détermination, une instruction de création, une cinquième instruction de détermination, et une sixième instruction de détermination ; la plage de distance prédéfinie correspondant à la première grappe est déterminée par le processeur qui exécute l'instruction de calcul, la quatrième instruction de détermination, l'instruction de création, la cinquième instruction de détermination, et la sixième instruction de détermination ;
quand elle est appelée et exécutée par le processeur, l'instruction de calcul amène le processeur à calculer une distance entre le vecteur central de la première grappe et un vecteur de caractéristiques de chacun des exemples de demandes de page Web compris dans la première grappe ;
quand elle est appelée et exécutée par le processeur, la quatrième instruction de détermination amène le processeur à déterminer une première moyenne et une première variance des distances calculées ;
quand elle est appelée et exécutée par le processeur, l'instruction de création amène le processeur à créer une distribution normale pour la première grappe en fonction de la première moyenne et de la première variance ;
quand elle est appelée et exécutée par le processeur, la cinquième instruction de détermination amène le processeur à déterminer une première position et une deuxième position, qui satisfont à une première condition prédéfinie, sur l'axe horizontal d'un système de coordonnées dans lequel se trouve la distribution normale pour la première grappe, dans lequel la première condition prédéfinie comporte : la première position et la deuxième position sont symétriques par rapport à un axe dont l'abscisse est égale à la première moyenne, et une probabilité comme quoi une distance qui correspond à un exemple quelconque de demande de page Web dans la première grappe se trouve entre le premier emplacement et le deuxième emplacement est une première probabilité prédéfinie, et dans lequel la distance qui correspond à un exemple quelconque de demande de page Web dans la première grappe est une distance entre un vecteur de caractéristiques de cet exemple de demande de page Web et le vecteur central de la première grappe ; et
quand elle est appelée et exécutée par le processeur, la sixième instruction de détermination amène le processeur à déterminer un intervalle défini par le premier emplacement et par le deuxième emplacement comme étant la plage de distance prédéfinie correspondant à des demandes de page Web non malveillantes dans la première grappe.

13. Instructions en mesure d'être exécutées par machine, qui comprennent une instruction d'extraction (612), une première instruction de détermination (622), une instruction de mise en grappe (632), une deuxième instruction de détermination (642), une troisième instruction de détermination (652), une instruction d'identification (662), dans lesquelles

le processeur (601) est amené par l'instruction d'extraction (612) à extraire des caractéristiques d'une pluralité d'exemples de demandes de page Web ;

le processeur (601) est amené par la première instruction de détermination (622) à déterminer un vecteur de caractéristiques pour des caractéristiques de chaque exemple de demande de page Web ;

le processeur (601) est amené par l'instruction de mise en grappe (632) à mettre en grappe la pluralité d'exemples de demandes de page Web en utilisant un algorithme de mise en grappe prédéfini en fonction des vecteurs de caractéristiques déterminés ;

le processeur (601) est amené par la deuxième instruction de détermination (642) à déterminer un vecteur central des vecteurs de caractéristiques d'exemples de demandes de page Web compris dans chaque grappe en fonction des vecteurs de caractéristiques des exemples de demandes de page Web compris dans cette grappe ;

le processeur (601) est amené par la troisième instruction de détermination (652) à déterminer une première grappe à laquelle une demande de page Web devant être identifiée appartient, quand la demande de page Web devant être identifiée est reçue ;

le processeur (601) est amené par l'instruction d'identification (662) à déterminer la demande de page Web devant être identifiée comme étant une demande de page Web malveillante, si une distance entre un vecteur de caractéristiques de la demande de page Web devant être identifiée et un vecteur central de la première grappe ne se trouve pas dans les limites d'une plage de distance prédéfinie correspondant à la première grappe ; **caractérisées en ce que** les instructions en mesure d'être exécutées par machine comprennent par ailleurs : une instruction de calcul, une quatrième instruction de détermination, une instruction de création, une cinquième instruction de détermination, et une sixième instruction de détermination ; la plage de distance prédéfinie correspondant à la première grappe est déterminée par le processeur qui exécute l'instruction de calcul, la quatrième instruction de détermination, l'instruction de création, la cinquième instruction de détermination, et la sixième instruction de détermination ;

le processeur (601) est amené par l'instruction de calcul à calculer une distance entre le vecteur central de la première grappe et un vecteur de caractéristiques de chacun des exemples de demandes de page Web compris dans la première grappe ;

le processeur (601) est amené par la quatrième instruction de détermination à déterminer une première moyenne et une première variance des distances calculées ;

le processeur (601) est amené par l'instruction de création à créer une distribution normale pour la première grappe en fonction de la première moyenne et de la première variance ;

le processeur (601) est amené par la cinquième instruction de détermination à déterminer une première position et une deuxième position, qui satisfont à une première condition prédéfinie, sur l'axe horizontal d'un système de coordonnées dans lequel se trouve la distribution normale pour la première grappe, dans lesquelles la première condition prédéfinie comporte : la première position et la deuxième position sont symétriques par rapport à un axe dont l'abscisse est égale à la première moyenne, et une probabilité comme quoi une distance qui correspond à un exemple quelconque de demande de page Web dans la première grappe se trouve entre le premier emplacement et le deuxième emplacement est une première probabilité prédéfinie, et dans lesquelles la distance qui correspond à un exemple quelconque de demande de page Web dans la première grappe est une distance entre un vecteur de caractéristiques de cet exemple de demande de page Web et le vecteur central de la première grappe ; et

le processeur (601) est amené par la sixième instruction de détermination à déterminer un intervalle défini par le premier emplacement et par le deuxième emplacement comme étant la plage de distance prédéfinie correspondant à des demandes de page Web non malveillantes dans la première grappe.

features of a plurality of sample web page requests
are extracted

101

a feature vector for features of each sample web page
request is determined

102

the plurality of sample web page requests are
clustered using a preset clustering algorithm
according to the determined feature vectors

103

a center vector of feature vectors of sample web page
requests included in each cluster is determined
according to the feature vectors of the sample web
page requests included in the cluster

104

when a web page request to be identified is received,
a first cluster to which the web page request to be
identified belongs is determined

105

if the distance between a feature vector of the web
page request to be identified and a center vector of
the first cluster is not within a preset distance range
corresponding to the first cluster, the web page
request to be identified is determined as a malicious
web page request

106

FIG. 1

words of a preset type in the plurality of sample web page requests are extracted
1011

the number of occurrences of each word in the extracted words is determined
1012

a structural feature of each of the plurality of sample web page requests is extracted
1013

for each sample web page request, the number of occurrences of a word of the preset type in this sample web page request and the structural feature of this sample web page request are determined as features of this sample web page request
1014

a feature vector for features of each sample web page request is determined
102

the plurality of sample web page requests are clustered using a preset clustering algorithm according to the determined feature vectors
103

a center vector of feature vectors of sample web page requests included in each cluster is determined according to the feature vectors of the sample web page requests included in the cluster
104

when a web page request to be identified is received, a first cluster to which the web page request to be identified belongs is determined
105

if the distance between a feature vector of the web page request to be identified and a center vector of the first cluster is not within a preset distance range corresponding to the first cluster, the web page request to be identified is determined as a malicious web page request
106

FIG. 2

FIG. 3

FIG. 4

| extraction unit | first determination unit | clustering unit | second determination unit | third determination unit | identification unit |

501    502    503    504    505    506

FIG. 5

601
processor

604

communication
interface
603

602

machine
readable
storage
medium

extraction
instruction
612

first
determination
instruction
622

clustering
instruction
632

second
determination
instruction
642

third
determination
instruction
652

identification
instruction
662

FIG. 6

**EP 3 684 025 B1**

## REFERENCES CITED IN THE DESCRIPTION

**Patent documents cited in the description**

- CN 201711188652
- CN 105553998 A